# EUROPEAN PATENT APPLICATION

(11) **EP 4 572 454 A1**
(43) Date of publication of application: **18.06.2025**
(21) Application number: 22954272.5
(22) Date of filing: 08.08.2022
(51) Int. Cl.: H04W 72/04

(54) **CELL CONFIGURATION METHOD AND APPARATUS**

(71) Applicant: FUJITSU LIMITED, Kawasaki-shi Kanagawa 211-8588 (JP)
(72) Inventor: JIA, Meiyi, Beijing 100022 (CN); YI, Su, Beijing 100022 (CN); ZHANG, Lei, Beijing 100022 (CN)
(74) Representative: Haseltine Lake Kempner LLP
(86) International application number: PCT/CN2022/110979
(87) International publication number: WO 2024/031292

(57) **Abstract**

Embodiments of this disclosure provide a method and apparatus for configuring a cell. The method includes: transmitting configuration information on a group of cells to a terminal equipment, the configuration information including cell identifier information and information needed in accessing to a cell; and transmitting L1 signaling and/or L2 signaling to the terminal equipment, the L1 signaling and/or the L2 signaling indicating at least one cell in the group of cells.

## Description

### Technical Field

This disclosure relates to the field of communication technologies.

### Background

Network controlled mobility is applicable to terminals in a connected state and may be divided into two types: cell-level mobility and beam-level mobility.

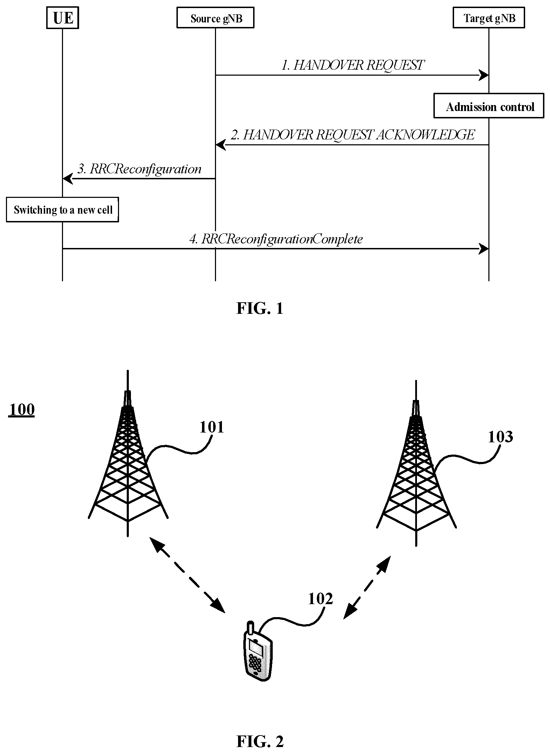

On the one hand, cell-level mobility requires explicit RRC signaling to be triggered i.e. cell handover. FIG. 1 is a schematic diagram of a signaling procedure of inter-gNB handover. As shown in FIG. 1, the signaling procedure includes:
step 1: a source gNB transmits a handover request (HANDOVER REQUEST) message to a target gNB;
step 2: after admission control, the target gNB transmits a handover request acknowledge (HANDOVER REQUEST ACKNOWLEDGE) message to the source gNB;
step 3: the source gNB transmits an RRC reconfiguration (RRCReconfiguration) message to a terminal (UE) after receiving the handover request acknowledge (HANDOVER REQUEST ACKNOWLEDGE) message, wherein the source gNB provides RRC configuration for the UE by transmitting the RRC reconfiguration (RRCReconfiguration) message received in the handover request acknowledge (HANDOVER REQUEST ACKNOWLEDGE) message, the RRC reconfiguration (RRCReconfiguration) message includes at least a cell ID and all information required to access a target cell, so that the UE is able to access the target cell without reading system information, access information to the target cell including beam-specific information;
step 4: the UE transmits an RRC reconfiguration complete (RRCReconfigurationComplete) message to the target gNB after being switched to a new cell.

On the other hand, the beam-level mobility does not require explicit RRC signaling to be triggered. The beam-level mobility may be within a cell or between cells, the latter is referred to as inter-cell beam management (ICBM). For the ICBM, the terminal may receive or transmit UE-dedicated channels/signals via a TRP associated with a PCI different from the PCI of a serving cell, while non-UE-dedicated channels/signals can only be received via a TRP associated with a PCI of the serving cell.

It should be noted that the above description of the background art is merely provided for clear and complete explanation of this disclosure and for easy understanding by those skilled in the art. And it should not be understood that the above technical solution is known to those skilled in the art as it is described in the background of this disclosure.

### Summary

When a terminal moves from a coverage area of a cell to a coverage area of another cell, a serving cell change (cell switch) needs to be performed at a certain point. In order to change the serving cell, the terminal needs to learn information on a target cell.

Currently, on the one hand, the change of the serving cell is triggered by L3 measurement and completed by RRC signaling, and reconfiguration with synchronization triggered for changing a primary cell (PCell) and a primary secondary cell (PSCell) and release of secondary cells (SCells) (if applicable) are increased.

In a conventional method, information on the primary cell (PCell) and the primary secondary cell (PSCell) is included in RRC signaling triggering the reconfiguration with synchronization of the primary cell (PCell) and the primary secondary cell (PSCell). The RRCReconfiguration message at least includes the cell ID and all the information needed in accessing to the target cell, so that the UE is able to access to the target cell without reading system information. Information for accessing to the target cell may include beam-specific information.

In Rel-16 mobility enhancement, conditional handover and handover reconfiguration are introduced.

Regarding conditional reconfiguration, the network configures some conditional reconfiguration candidates and execution conditions for the terminal. The terminal performs evaluation according to execution conditions, and when evaluation conditions are satisfied, corresponding configuration is applied.

Specifically, in the conditional reconfiguration, the network configures one or more candidate target special cells for the UE. The UE evaluates conditions of each configured candidate target special cell. The UE applies conditional reconfiguration of one of target special cells satisfying associated execution conditions. The network provides configuration parameters of the target special cell in a *ConditionalReconfiguration* IE.

Based on a received *ConditionalReconfiguration* IE, the UE executes the following behaviors:
if *ConditionalReconfiguration* includes *condReconfigToRemoveList,* executing a conditional reconfiguration removal procedure; and
if *ConditionalReconfiguration* includes *condReconfigToAddModList,* executing conditional reconfiguration addition/modification.

The conditional reconfiguration addition/modification include(s) that:
for each *condReconfigId* received in *condReconfigToAddModList,* the UE will,
if an entry matching with *condReconfigld* exists in *condReconfigToAddModList* in *arConditionalReconfig,*
if the entry in *condReconfigToAddModList* includes a *condExecutionCond,* replace this entry with a value of the received *condReconfigId*;
if the entry in *condReconfigToAddModList* includes a *condRRCReconfig,* replace this entry with a value of the received *condReconfigId*;
otherwise, add a new entry for *condReconfigId* in *VarConditionalReconfig;* and
execute evaluation of conditional reconfiguration.

The evaluation of conditional reconfiguration includes:
the UE will,
for each *condReconfigId* in *VarConditionalReconfig,*
   it is deemed that a cell with a physical cell identifier (PCI) that matches a value indicated in *ServingCellConfigCommon* in *reconfigurationWithSync* included in the received *condRRCReconfig* is an applicable cell;
   for each *measId* included in *measIdList* in *VarMeasConfig* indicated in *condExecutionCond* associated with *condReconfigld,*
      if an entry condition applicable to an event associated with *condReconfigld,* i.e. a corresponding event of *condEventld(s)* of corresponding *condTriggerConfig* in *VarConditionalReconfig,* is satisfied for the applicable cell and all measurements during a corresponding *timeToTrigger* period defined in *VarConditionalReconfig* for the event after being filtered by layer 3, it is deemed that an event associated with *measld* is satisfied;
      if an exit condition applicable to the event associated with *condReconfigld,* i.e. a corresponding event of *condEventId(s)* of corresponding *condTriggerConfig* in *VarConditionalReconfig,* is satisfied for the applicable cell and all measurements during the corresponding *timeToTrigger* period defined in *VarConditionalReconfig* for the event after being filtered by layer 3, it is deemed that the event associated with *measId* is not satisfied;
      if for a target candidate cell in stored *condRRCReconfig,* events associated with all measId (s) in *condTriggerConfig* are satisfied,
         it is deemed that the target candidate cell associated with *condReconfigId* in the stored *condRRCReconfig* is a triggered cell; and
         initiate execution of conditional reconfiguration.

The execution of conditional reconfiguration includes that:
the UE will,
for a triggered cell, if there exists a triggered cell selected as a selected cell for the execution of conditional reconfiguration,
for the selected cell for the execution of conditional reconfiguration, apply stored *condRRCReconfig* of this selected cell.

Related IEs include *ConditionalReconfiguration, CondReconfigToAddModList* and *CondReconfigId*,
wherein *ConditionalReconfiguration* IE is defined as "The IE *ConditionalReconfiguration* is used to add, modify and release the configuration of conditional reconfiguration".

The *ConditionalReconfiguration* IE may be expressed as follows by using an abstract syntax marking ASN.1 data format:

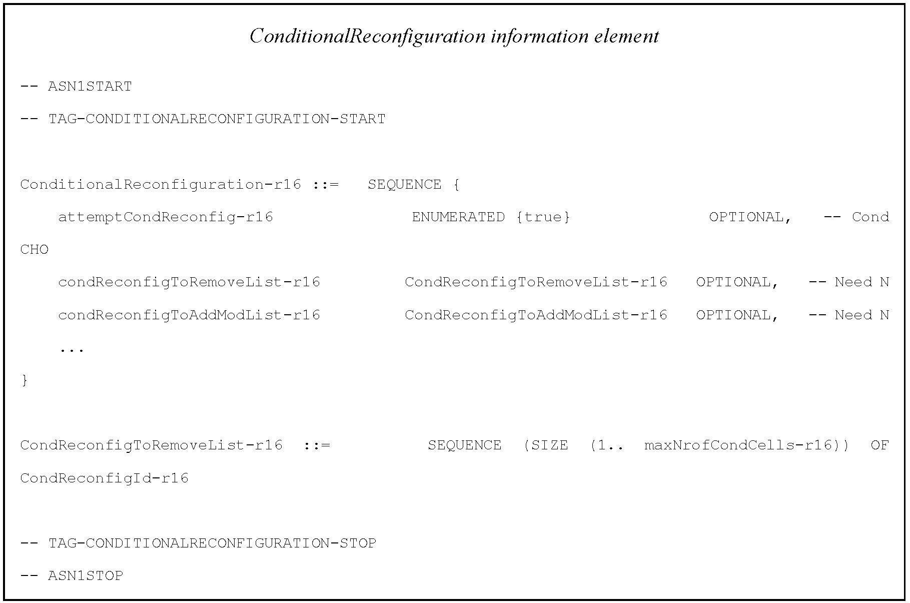

Description of the *ConditionalReconfiguration* domain is as follows:

| Description of the *ConditionalReconfiguration* domain |
|---|
| ***attemptCondReconfig*** |
| If applicable, if the selected cell is a target candidate cell and is first cell selection after a failure described in subsection 5.3.7.3, the UE shall execute conditional reconfiguration. |
| ***condReconfigToAddModList*** |
| Configuration list of candidate SpCells added or modified for CHO or CPC. |
| ***condReconfigToRemoveList*** |
| Configuration list of candidate SpCells to be deleted. |

| Conditional existence | Interpretation |
|---|---|
| *CHO* | If the UE is configured with at least one candidate SpCell used for CHO, the field is optional, and R is needed; otherwise, the field is absent. |

The *CondReconfigToAddModList* IE is defined as "The IE *CondReconfigToAddModList* concerns a list of conditional reconfigurations to add or modify, with for each entry the *condReconfigId* and the associated *condExecutionCond* and *condRRCReconfig".*

The *CondReconfigToAddModList* IE may be expressed as follows by using an abstract syntax marking ASN.1 data format:

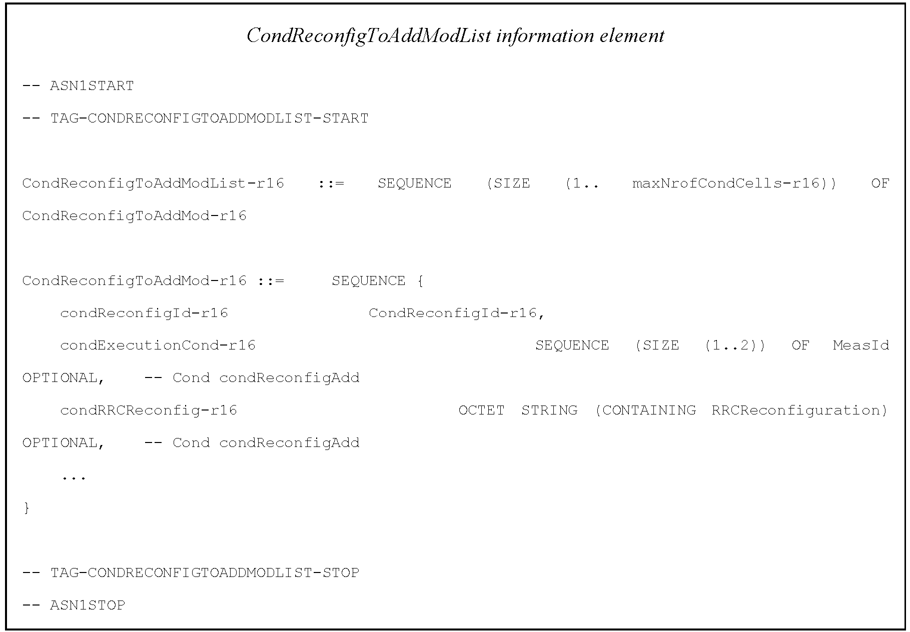

Description of the *CondReconfigToAddModList* domain is as follows:

| Description of the *CondReconfigToAddMod* domain |
|---|
| ***condExecutionCond*** |
| Execution conditions needing to be satisfied for triggering the execution of the conditional reconfiguration. When two triggering events (Meas Id) are configured for the candidate cells, the network ensures that both of them quote identical measObject. |
| ***condRRCReconfig*** |
| RRCReconfiguration message applied when the conditions are satisfied. RRCReconfiguration message contained in condRRCReconfig should not contain a field conditionalReconfiguration or a field daps-Config. |

| Conditional existence | Interpretation |
|---|---|
| *condReconfigAdd* | When condReconfigId is added, the field is mandatory; otherwise, the field is optional, and M is needed. |

The *CondReconfigId* IE is defined as "The IE *CondReconfigId* is used to identify a CHO or CPC configuration".

The *CondReconfigId* IE may be expressed as follows by using an abstract syntax marking ASN.1 data format:

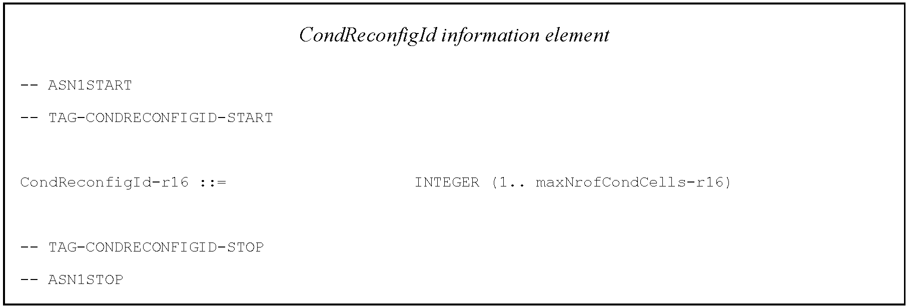

Regarding the beam-level mobility introduced in Rel-17, the gNB provides measurement configuration for terminals via RRC signaling, including SSB/CSI resources and resource groups, configuration of reporting and triggering states triggering measurement and reporting of channels and interference. In case of ICBM, the measurement configuration includes SSB resources associated with PCIs that are different from PCI of a serving cell. Then, the beam-level mobility is processed by a physical layer and MAC layer control signaling at a lower layer, without requiring RRC to learn which beam is being used at a certain time point.

For ICBM, the network configures SSB resources and TCI states and corresponding PCI (s) different from those of the serving cell for terminals via RRC. Involved IEs include *CSI-SSB-ResourceSet, ServingCellConfig,* and *SSB-MTC*, etc.

Wherein, the *CSI-SSB-ResourceSet* IE is defined as "The IE *CSI-SSB-ResourceSet* is used to configure one SS/PBCH block resource set which refers to SS/PBCH as indicated in *ServingCellConfigCommon".*

The *CSI-SSB-ResourceSet* IE may be expressed as follows by using an abstract syntax marking ASN.1 data format:

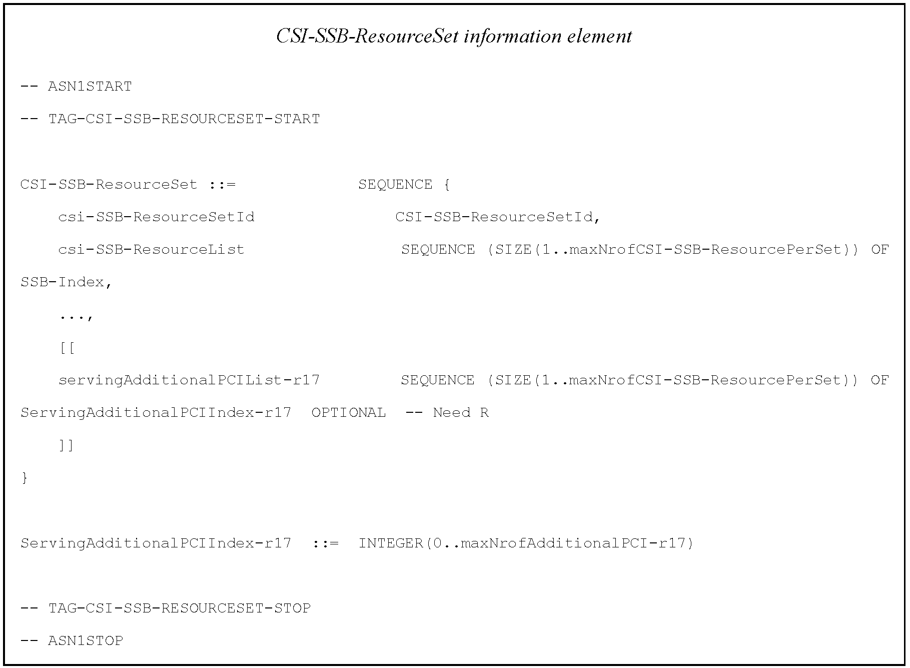

Description of the *CSI-SSB-ResourceSet* domain is as follows:

| **Description of the** ***CSI-SSB-ResourceSe**t* |
|---|
| ***servingAdditionalPCIList*** |
| A physical cell identifier indicating SSBs in *csi-SSB-ResourceList.* If applicable, the list includes entries of a number identical to that of *csi-SSB-ResourceList.* A first entry in the list denotes a value of PCI of a first entry in *csi-SSB-ResourceList, a* second entry in the list denotes a value of PCI of a second entry in *csi-SSB-ResourceList,* and so on. For each entry, following contents are applicable: |
| - if the value is 0, the PCI is PCI of a serving cell that defines |
| *CSI-SSB-ResourceSet*; |
| - otherwise, the value is *additionalPCI-r17* of one *SSB-MTC-AdditionalPCI-r17* in *additionalPCIList-r17* in *ServingCellConfig,* and the PCI is *additionalPCI-r17* in the *SSB-MTC-AdditionalPCI-r17.* |

The *ServingCellConfig* IE is defined as "The IE *ServingCellConfig* is used to configure (add or modify) the UE with a serving cell, which may be the SpCell or an SCell of an MCG or SCG. The parameters herein are mostly UE specific but partly also cell specific (e.g. in additionally configured bandwidth parts). Reconfiguration between a PUCCH and PUCCHless SCell is only supported using an SCell release and add".

The *ServingCellConfig* IE may be expressed as follows by using an abstract syntax marking ASN.1 data format:

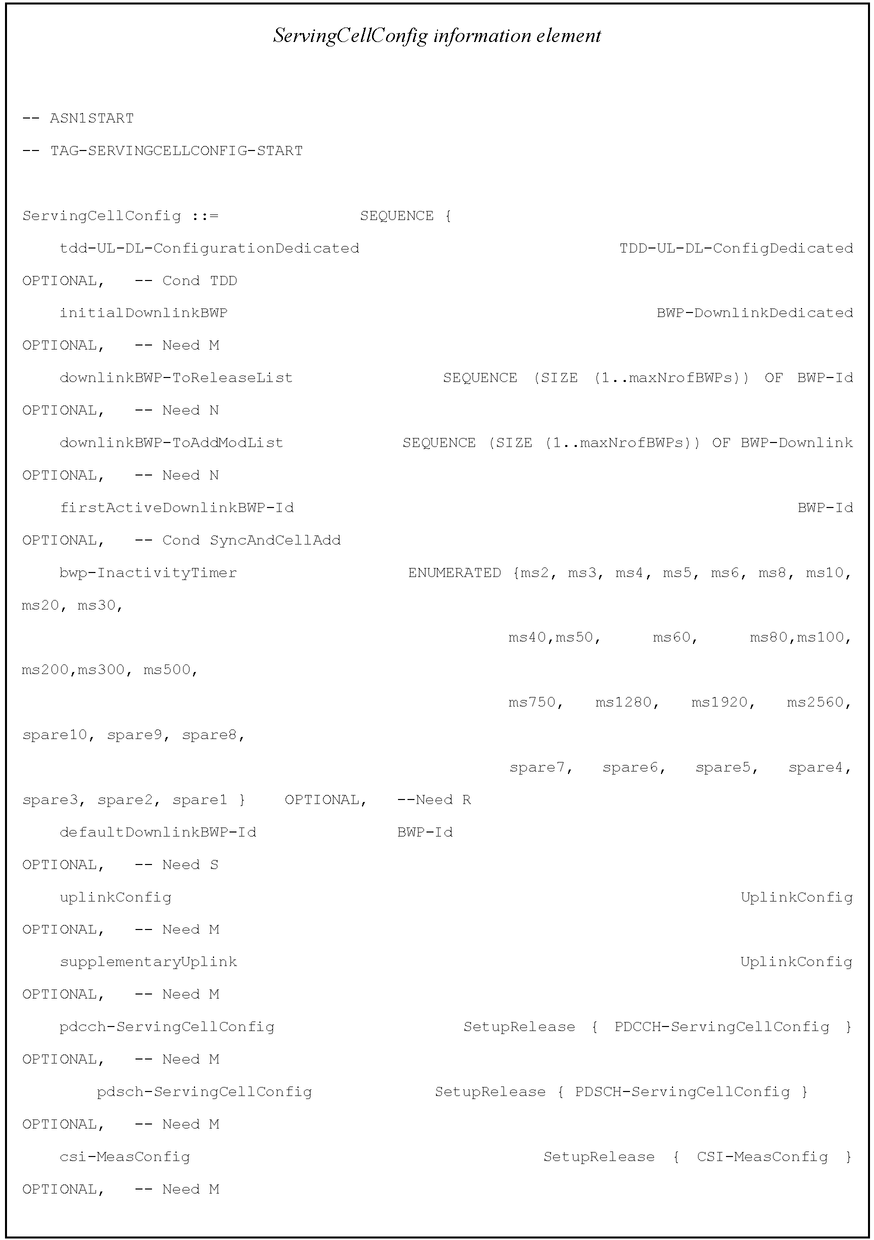

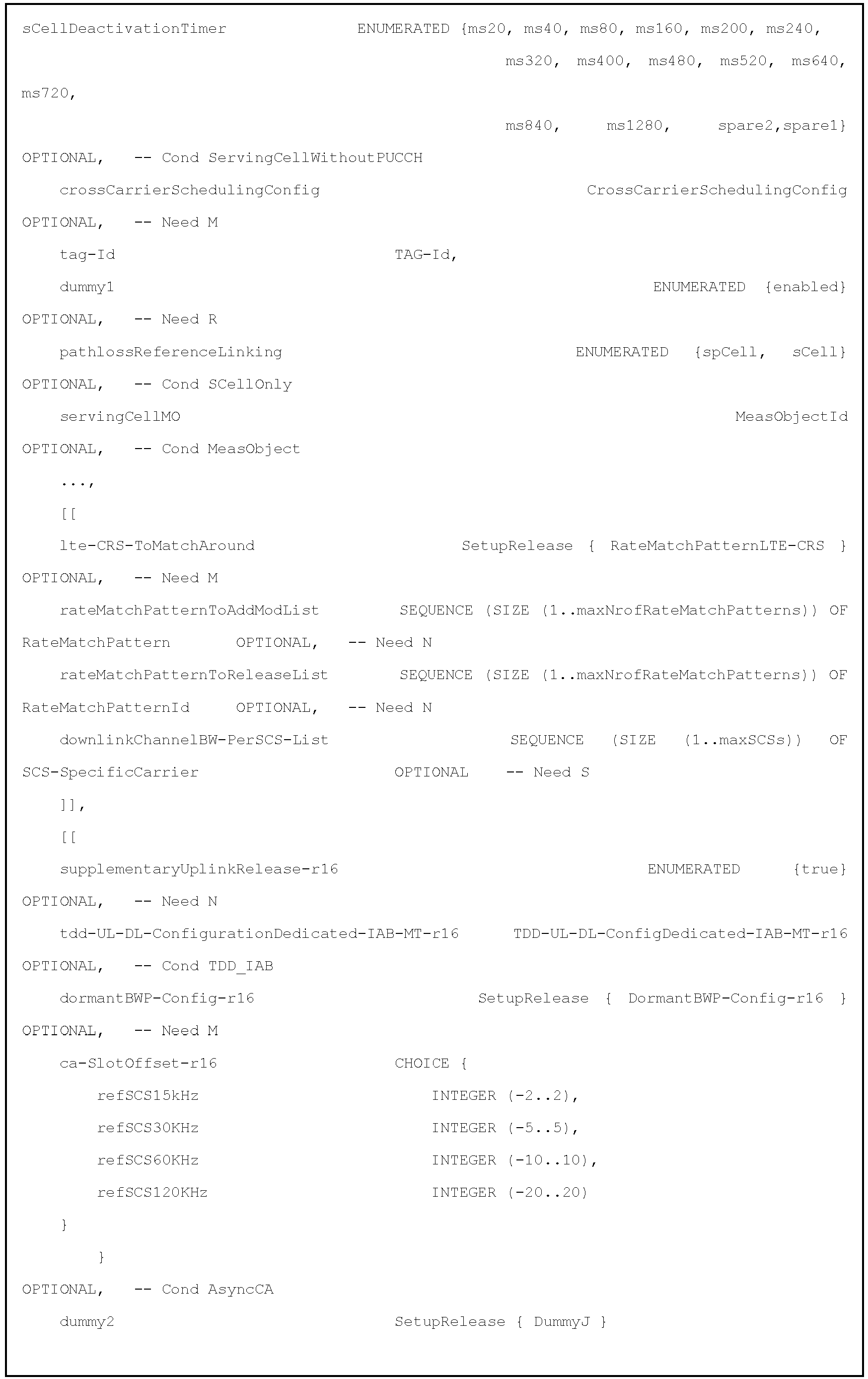

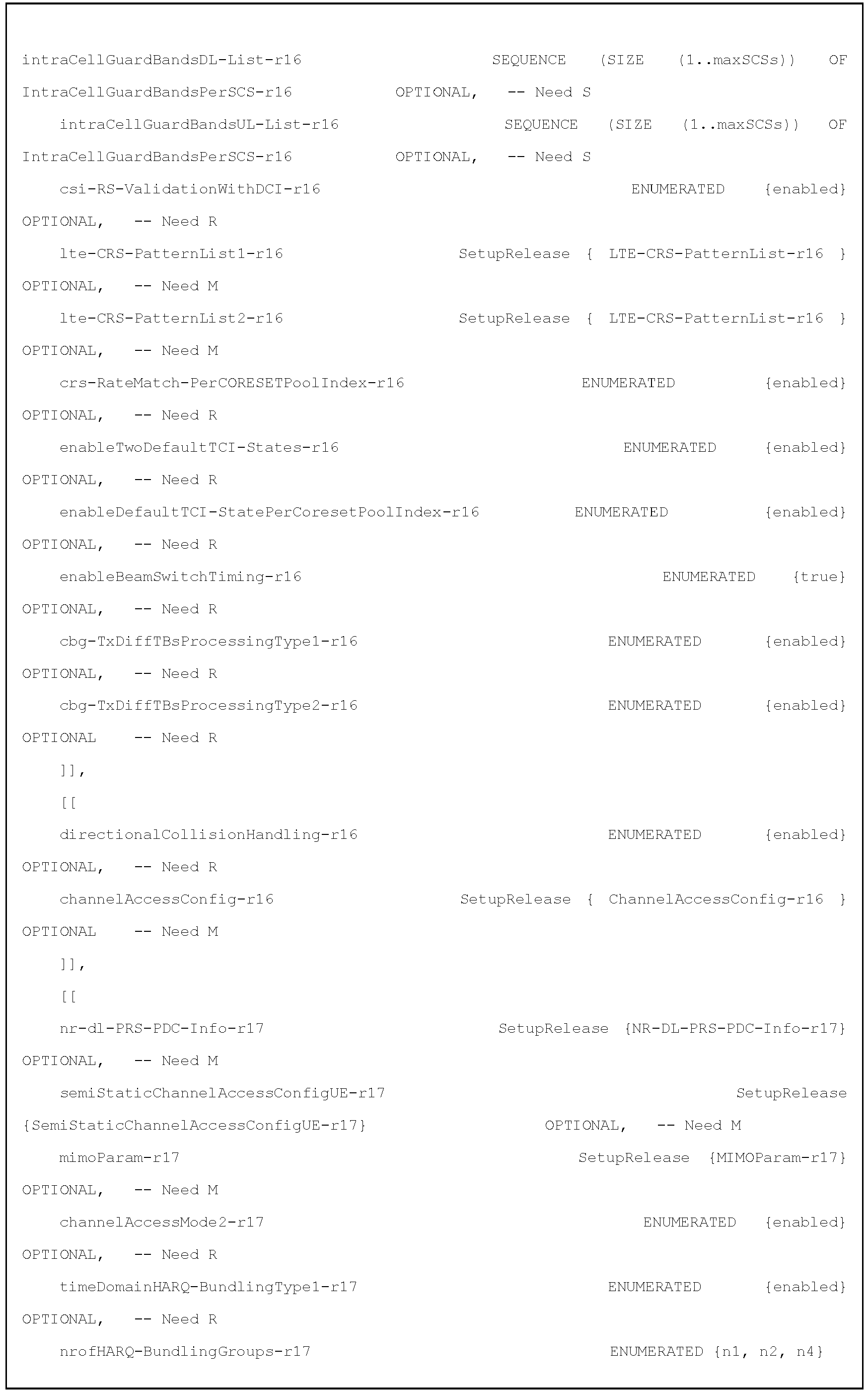

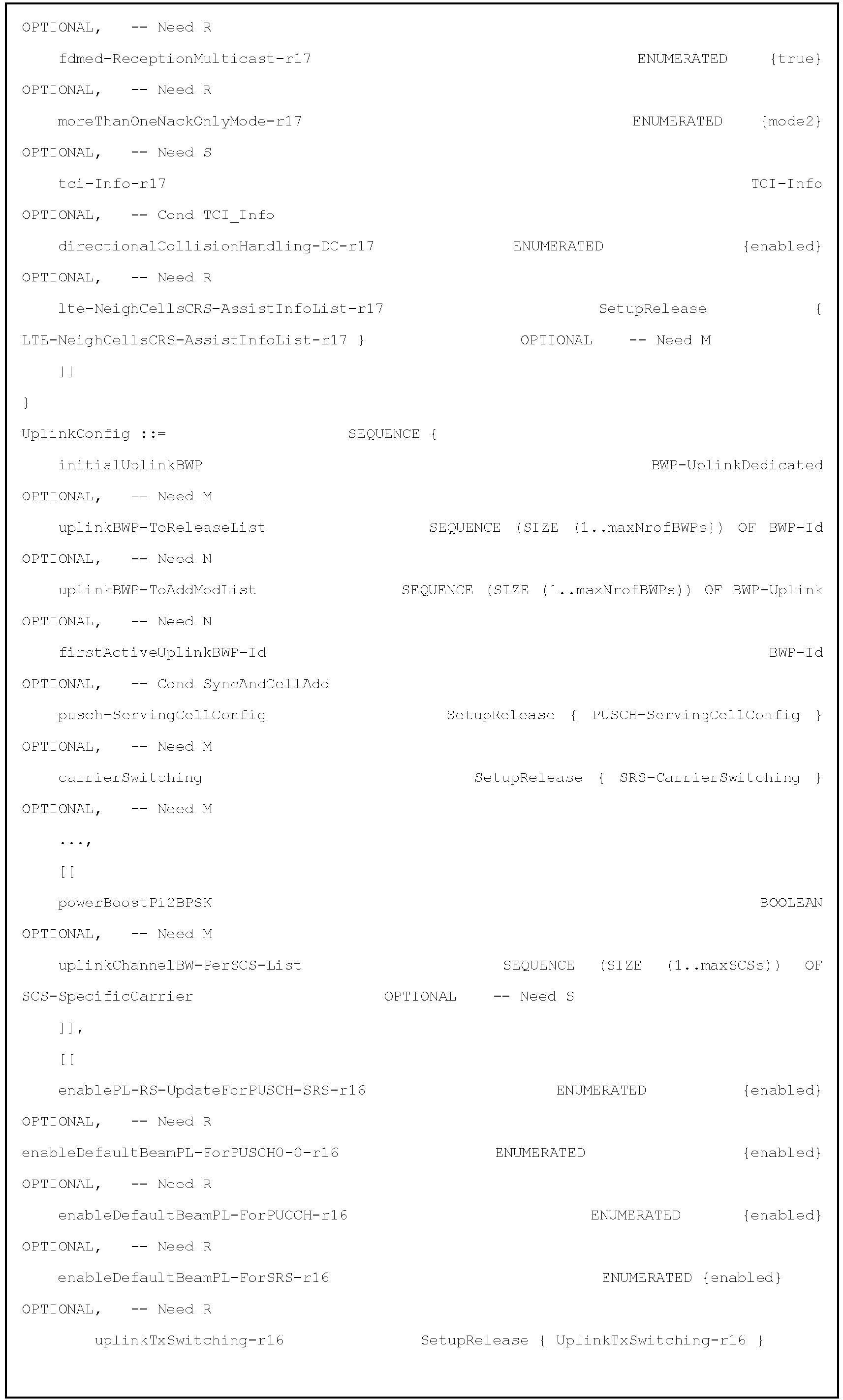

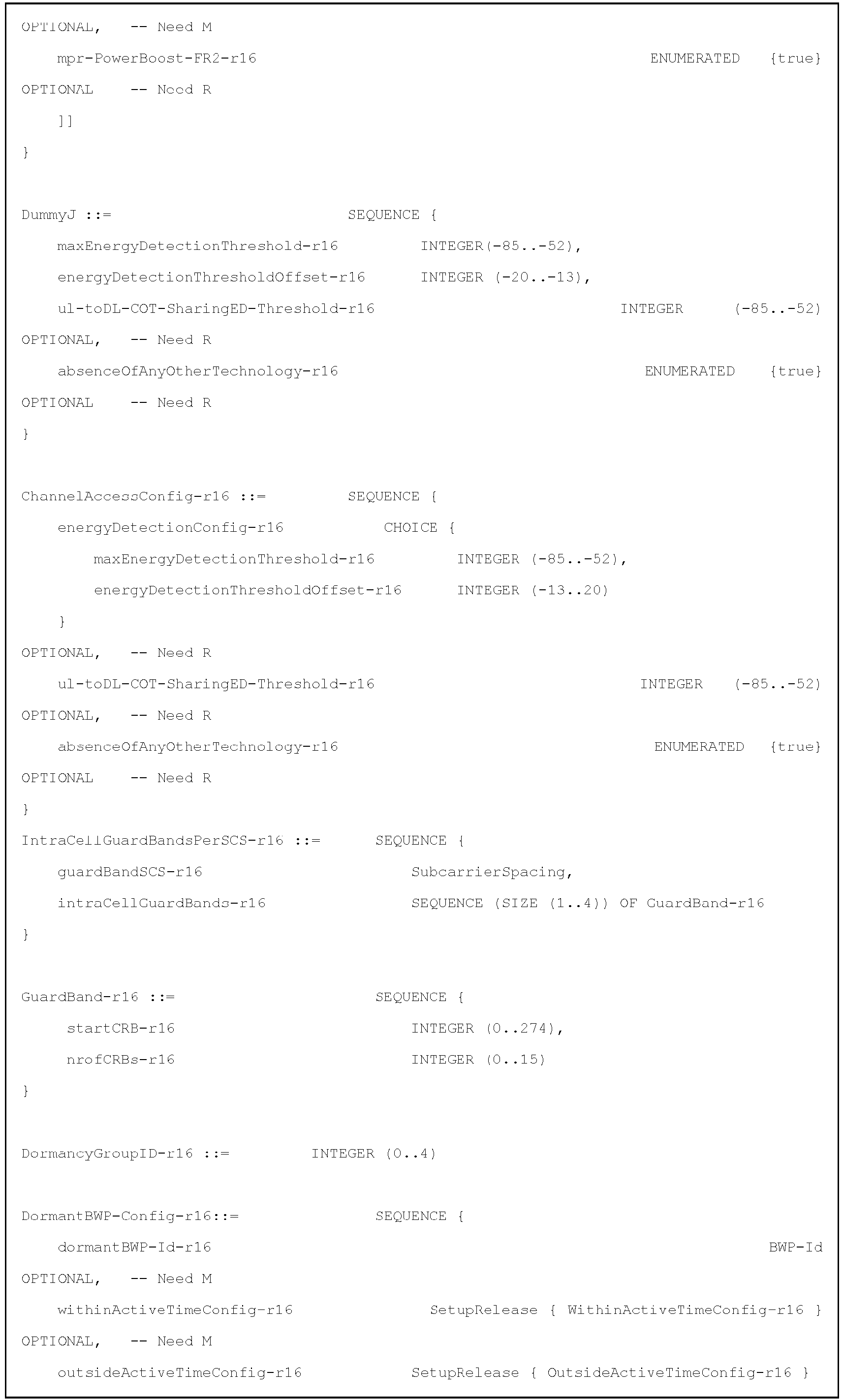

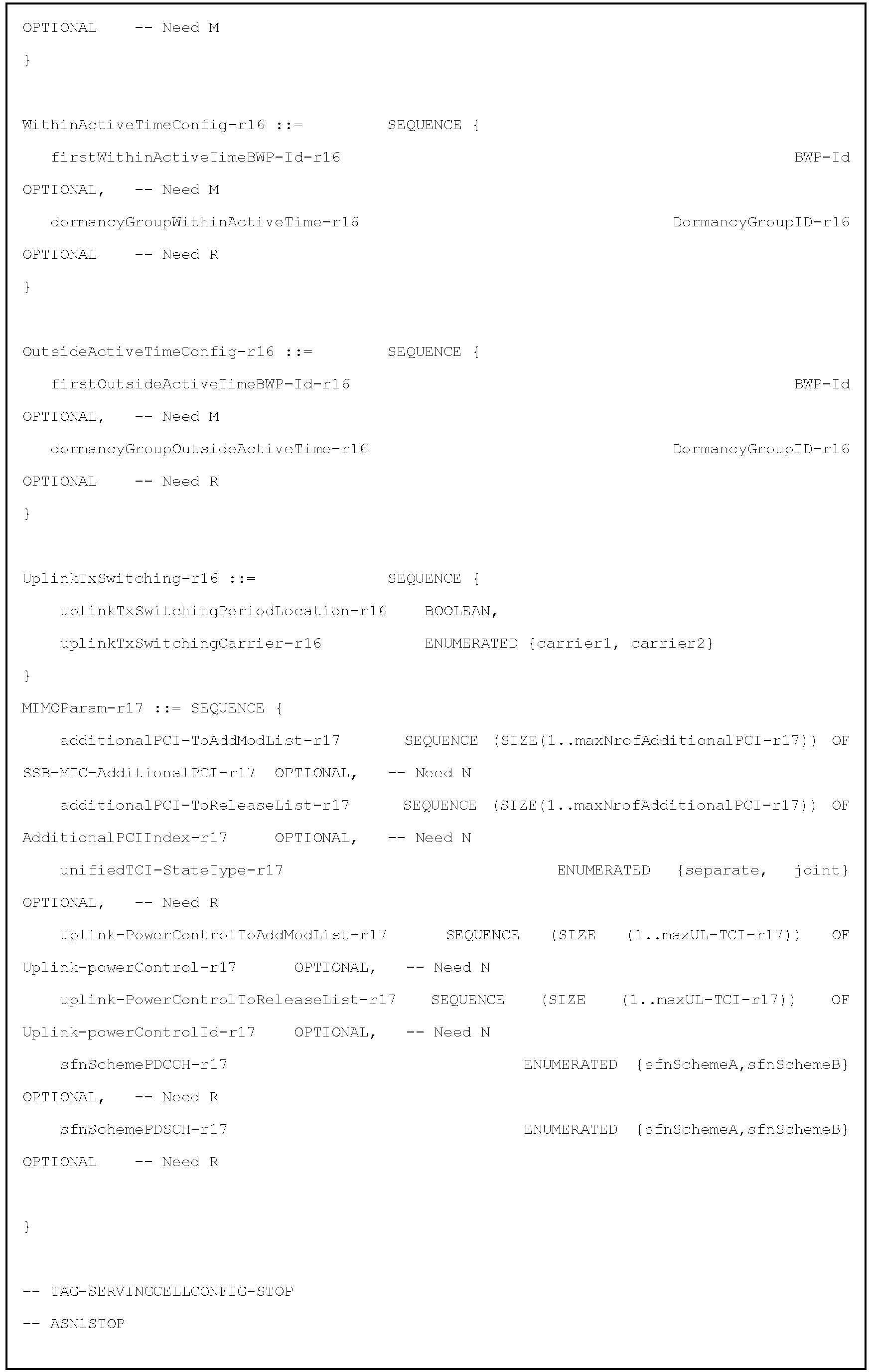

| Description of the *ServingCellConfig* domain is as follows: |
|---|
| **Description of the *ServingCellConfig* domain** |
| ***additionalPCIList*** |
| Information list of additional SSBs with PCI different from the PCI of the serving cell. The SSBs with different PCI are not used for measurement event evaluation. |

The *SSB-MTC* IE is defined as "The IE *SSB-MTC* is used to configure measurement timing configurations, i.e., timing occasions at which the UE measures SSBs".

The *SSB-MTC* IE may be expressed as follows by using an abstract syntax marking ASN.1 data format:

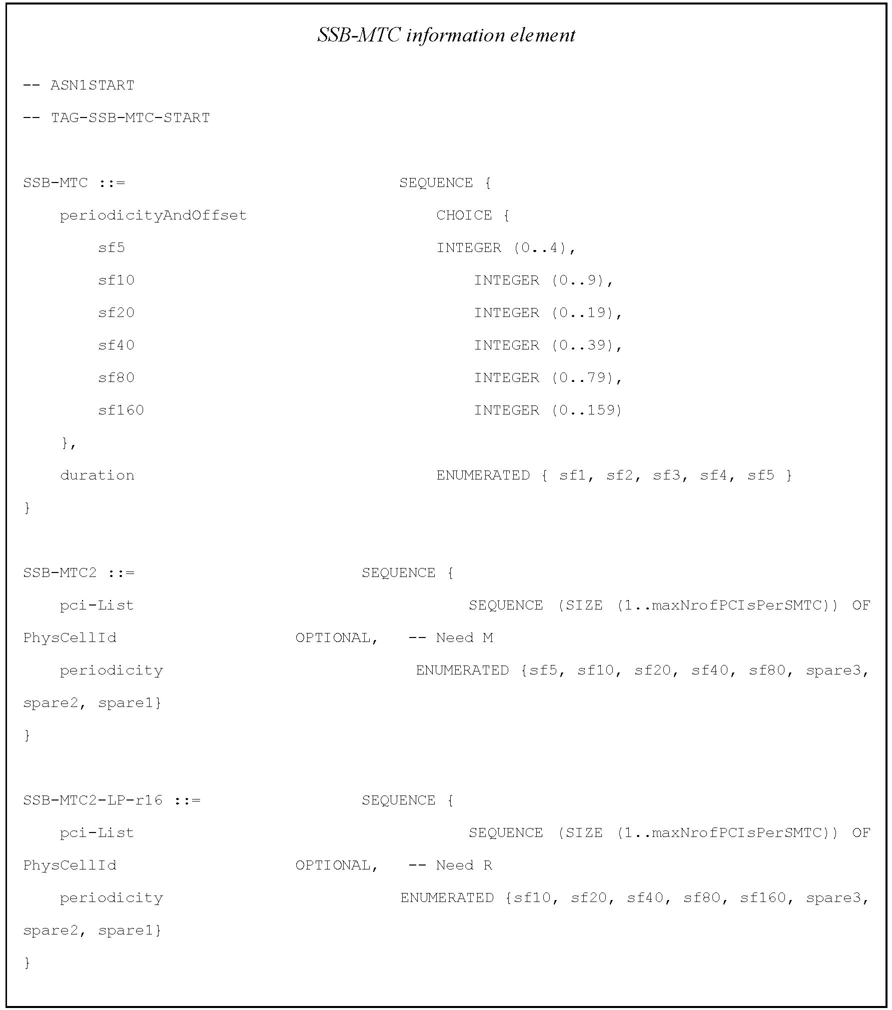

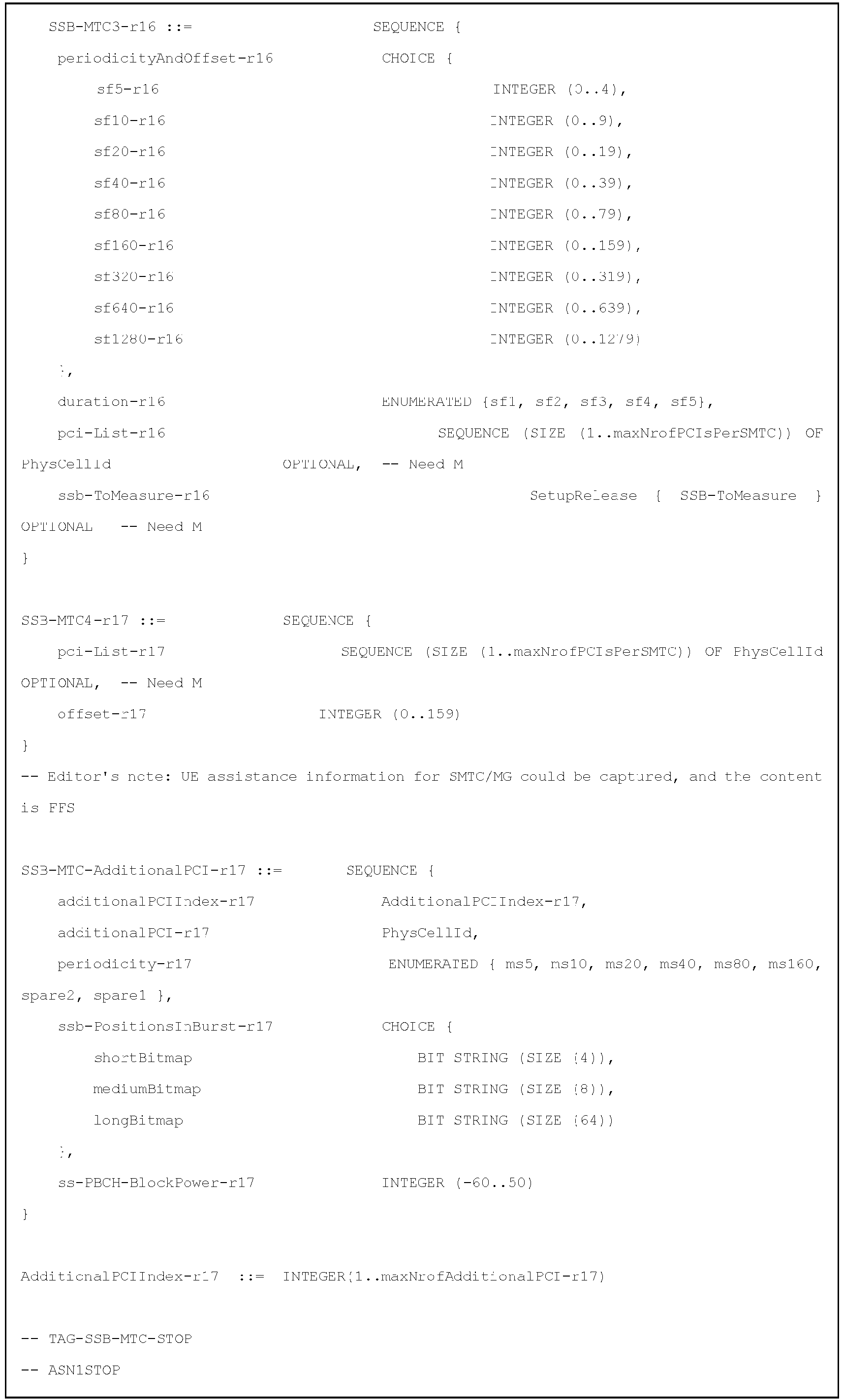

Description of the *SSB-MTC-AdditionalPCI* domain is as follows:

| **Description of the *SSB-MTC-AdditionalPCI* domain** |
|---|
| ***additionalPCI*** |
| PCI of additional SSBs with PCI different from the PCI of the serving cell. |
| ***periodicity*** |
| Periodicity of SS/PBCH blocks, see 5.5.2.10. The periodicity is given in a form the number of subframes. |
| ***ssb-PositionsInBurst*** |
| Time-domain positions of SS blocks in the half-frames are indicated by the SS/PBCH blocks defined in subsection 4.1 of TS 38.213 [13]. A first/leftmost bit corresponds to an SS/PBCH block index 0, a second bit corresponds to an SS/PBCH block index 1, and so on. The value 0 in the bitmap denotes not transmitting corresponding SS/PBCH blocks, and the value 1 denotes transmitting corresponding SS/PBCH blocks. |
| ***ss-PBCH-BlockPower*** |
| Average EPRE of resource elements carrying secondary synchronization signals used by the NW for SSB transmission, refer to [13] section 7 of TS 38.213. |

In PSCell change (CPC) and conditional PSCell addition (CPA) in Rel-17, when random access to a target PSCell is completed, a UE of CPC/CPA configuration must release the CPC/CPA configuration. Therefore, if there exists no advanced CPC/CPA reconfiguration and reinitialization from the network, the UE is unable to perform subsequent CPC/CPA. This increases latency of cell changes and increases signaling overhead, especially in a case of frequent SCG changes when working on FR2. Hence, a goal of MR-DC with selective active cell groups is to ensure subsequent CPC/CPA after SCG changes, without needing the network to prepare for reconfiguring and reinitializing CPC/CPA. This lowers signaling overhead and interruption time of SCG changes. A specific goal is to define a mechanism and process of enhancing NR-DC with selective active cell groups (at least for SCG) by L3, so that subsequent cell group changes after CPC/CPA reconfiguration and reinitialization are not needed after CGs are changed.

It was found by the inventors that when a terminal moves from a coverage area of a cell to a coverage area of another cell, a serving cell change needs to be performed at a certain point. Currently, in various scenarios, serving cell changes are triggered by L3 measurement and completed by RRC signaling, involving complete L1 (and L2) reconfiguration, thereby resulting in longer latency, greater signaling overhead and longer interruption times than beam switching mobility. On the contrary, cell changes based on L1/L2 are able to lower mobility latency, signaling overhead and interruption time.

However, there is currently no effective mechanism to carry out cell configuration methods for rapid application in inter-cell mobility based on L1/L2 signaling.

In order to solve at least one of the above problems, embodiments of this disclosure provide a method and apparatus for configuring a cell.

According to a first aspect of the embodiments of this disclosure, there is provided an apparatus for configuring a cell, provided in a first network node, the apparatus including: a first transmitting unit configured to transmit configuration information on a group of cells to a terminal equipment, the configuration information including cell identifier information and information needed in accessing to a cell; and a second transmitting unit configured to transmit L1 signaling and/or L2 signaling to the terminal equipment, the L1 signaling and/or the L2 signaling indicating at least one cell in the group of cells.

According to a second aspect of the embodiments of this disclosure, there is provided an apparatus for configuring a cell, provided in a terminal equipment, the apparatus including: a first receiving unit configured to receive configuration information of a group of cells from a first network node, the configuration information including cell identifier information and information needed in accessing to a cell; a second receiving unit configured to receive L1 signaling and/or L2 signaling from the first network node, the L1 signaling and/or the L2 signaling indicating at least one cell in the group of cells; and a first applying unit configured to apply configuration information corresponding to a cell indicated by the L1 signaling and/or the L2 signaling in the configuration information of the group of cells.

According to a third aspect of the embodiments of this disclosure, there is provided an apparatus for configuring a cell, provided in a first network node, the apparatus including: a third transmitting unit configured to transmit configuration information of a group of cells to a terminal equipment, the configuration information including cell identifier information and information needed in accessing to a cell, and the configuration information being associated with at least one serving cell of the terminal equipment and/or being associated with at least one area; and a fourth transmitting unit configured to transmit a condition for performing cell change to the terminal equipment.

According to a fourth aspect of the embodiments of this disclosure, there is provided an apparatus for configuring a cell, provided in a terminal, the apparatus including: a third receiving unit configured to receive configuration information of a group of cells from a first network node, the configuration information including cell identifier information and information needed in accessing to a cell, and the configuration information being associated with at least one serving cell of the terminal equipment and/or being associated with at least one area; a fourth receiving unit configured to receive a condition for performing cell change from the first network node; and a second applying unit configured to apply corresponding configuration information in the configuration information of the group of cells where the cell is located.

According to a fifth aspect of the embodiments of this disclosure, there is provided a network node, including the apparatus as described in the embodiment of the first or third aspect of this disclosure.

According to a sixth aspect of the embodiments of this disclosure, there is provided a terminal equipment, including the apparatus as described in the embodiment of the second or fourth aspect of this disclosure.

According to a seventh aspect of the embodiments of this disclosure, there is provided a communication system, including the network node as described in the fifth aspect of the embodiments of this disclosure and/or the terminal equipment as described in the sixth aspect of the embodiments of this disclosure.

According to an eighth aspect of the embodiments of this disclosure, there is provided a method for configuring a cell, applicable to a first network node, the method including: transmitting configuration information on a group of cells to a terminal equipment, the configuration information including cell identifier information and information needed in accessing to a cell; and transmitting L1 signaling and/or L2 signaling to the terminal equipment, the L1 signaling and/or the L2 signaling indicating at least one cell in the group of cells.

According to a ninth aspect of the embodiments of this disclosure, there is provided a method for configuring a cell, applicable to a terminal equipment, the method including: receiving configuration information of a group of cells from a first network node, the configuration information including cell identifier information and information needed in accessing to a cell; receiving L1 signaling and/or L2 signaling from the first network node, the L1 signaling and/or the L2 signaling indicating at least one cell in the group of cells; and applying configuration information corresponding to a cell indicated by the L1 signaling and/or the L2 signaling in the configuration information of the group of cells.

According to a tenth aspect of the embodiments of this disclosure, there is provided a method for configuring a cell, applicable to a first network node, the method including: transmitting configuration information of a group of cells to a terminal equipment, the configuration information including cell identifier information and information needed in accessing to a cell, and the configuration information being associated with at least one serving cell of the terminal equipment and/or being associated with at least one area; and transmitting a condition for performing cell change to the terminal equipment.

According to an eleventh aspect of the embodiments of this disclosure, there is provided a method for configuring a cell, applicable to a terminal, the method including: receiving configuration information of a group of cells from a first network node, the configuration information including cell identifier information and information needed in accessing to a cell, and the configuration information being associated with at least one serving cell of the terminal equipment and/or being associated with at least one area; receiving a condition for performing cell change from the first network node; and applying corresponding configuration information in the configuration information of the group of cells where the cell is located.

According to a twelfth aspect of the embodiments of this disclosure, there is provided a computer readable program code, which, when executed in an apparatus for configuring a cell or a first network node, will cause the apparatus for configuring a cell or the first network node to carry out the method for configuring a cell as described in the embodiment of the eighth or tenth aspect of this disclosure.

According to a thirteenth aspect of the embodiments of this disclosure, there is provided a computer readable program code, which, when executed in an apparatus for configuring a cell or a terminal equipment, will cause the apparatus for configuring a cell or the terminal equipment to carry out the method for configuring a cell as described in the embodiment of the ninth or eleventh aspect of this disclosure.

According to a fourteenth aspect of the embodiments of this disclosure, there is provided a computer readable medium, including a computer readable program code, which will cause an apparatus for configuring a cell or a first network node to carry out the method for configuring a cell as described in the embodiment of the eighth or tenth aspect of this disclosure.

According to a fifteenth aspect of the embodiments of this disclosure, there is provided a computer readable medium, including a computer readable program code, which will cause an apparatus for configuring a cell or a terminal equipment to carry out the method for configuring a cell as described in the embodiment of the ninth or eleventh aspect of this disclosure.

An advantage of the embodiments of this disclosure exists in that the first network node configures configuration information of a group of cells for the terminal equipment, so that the terminal equipment is able to quickly apply configuration information in the configuration information of the group of cells corresponding to L1 signaling and/or L2 signaling received from the first network node, and change from the serving cell to the cell corresponding to the cell configuration information, thereby lowering latency, signaling overhead and interruption time.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of a signaling procedure of inter-gNB handover;
FIG. 2 is a schematic diagram of a communication system of the embodiments of this disclosure;
FIG. 3 is a schematic diagram of the method for configuring a cell of embodiment 1 of this disclosure;
FIG. 4 is a schematic diagram of a basic signaling procedure of cell switch (cell mobility) based on L1 signaling and/or L2 signaling of embodiment 1 of this disclosure;
FIG. 5 is a schematic diagram of the method for configuring a cell of embodiment 2 of this disclosure;
FIG. 6 is a schematic diagram of the method for configuring and changing a cell of embodiment 3 of this disclosure;
FIG. 7 is a schematic diagram of the method for configuring a cell of embodiment 4 of this disclosure;
FIG. 8 is a schematic diagram of the method for configuring a cell of embodiment 5 of this disclosure;
FIG. 9 is a schematic diagram of the method for configuring a cell of embodiment 6 of this disclosure;
FIG. 10 is a schematic diagram of the apparatus for configuring a cell of embodiment 7 of this disclosure;
FIG. 11 is a schematic diagram of the apparatus for configuring a cell of embodiment 8 of this disclosure;
FIG. 12 is a schematic diagram of the apparatus for configuring a cell of embodiment 9 of this disclosure;
FIG. 13 is a schematic diagram of the apparatus for configuring a cell of embodiment 10 of this disclosure;
FIG. 14 is a block diagram of a systematic structure of the network node of embodiment 11 of this disclosure; and
FIG. 15 is a block diagram of a systematic structure of the terminal equipment of embodiment 12 of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB-CU and one or more gNB-DUs, wherein the CU/DU is a logical node of the gNB having a part of functions of the gNB. And a term "cell" may refer to a base station and/or its coverage area, depending on a context of the term. One gNB-DU supports one or more cells, and one cell is supported by only one gNB-DU.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), or a station, etc., such as a terminal equipment served by an IAB-node or an IAB-donor under an IAB architecture.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, all of "when... ", "in a case where...", "for a case where..." and "if..." denote one or some conditions or states, and furthermore, all of these expressions are interchangeable.

Scenarios of the embodiments of this disclosure shall be described below by way of examples; however, this disclosure is not limited thereto.

FIG. 2 is a schematic diagram of a communication system of an embodiment of this disclosure, in which a case where a terminal equipment and a network device are taken as examples is schematically shown. As shown in FIG. 2, a communication system 100 may include a first network node 101 and a terminal equipment 102. When terminal equipment 102 performs cell change, the first network node 101 serves as a source network node, and at the same time, it serves as a target network node; or, as shown in FIG. 2, the communication system 100 may also include a second network node 103, in which case when the terminal equipment 102 performs cell change, the first network node 101 is a source network node, and the second network node 103 is a target network node.

For the sake of simplicity, an example having only one terminal equipment is schematically given in FIG. 2.

The first network node 101 and the second network node 103 are, for example, NR gNBs.

In the embodiments of this disclosure, for inter-gNB cell changes, i.e. inter-gNB-CU cell changes, the first network node 101 and the second network node 103 are, for example, NR gNBs.

For inter-gNB-DU cell changes, the first network node 101 and the second network node 103 are different gNB-DUs within the same gNB-CU.

For intra-gNB-DU cell changes, the first network node 101 and the second network node 103 are different TRPs or repeaters within the same gNB-DU; or, the first network node 101 is both a source network node and a target network node, and a source cell and a target cell are both located on the first network node 101, in which case the communication system 100 of the embodiment of this disclosure includes the first network node 101 and the terminal equipment 102.

In the embodiments of this disclosure, FIG. 2 represents an IAB network, in which the terminal equipment 102 may either be a UE or an IAB-MT.

For inter-IAB-donor-CU cell changes, the first network node 101 and the second network node 103 are different IAB-donor-CUs, that is, when the terminal equipment 102 needs to perform cell change, the first network node 101 is a source IAB-donor-CU, and the second network node 103 is a target IAB-donor-CU.

For inter-IAB-donor-DU cell changes within an IAB-donor-CU, the first network node 101 and the second network node 103 are different IAB-donor-DUs within the same IAB-donor-CU, that is, when the terminal equipment 102 needs to perform cell change, the first network node 101 is a source IAB-donor-DU, and the second network node 103 is a target IAB-donor-DU.

For inter-IAB-node cell changes, the communication system 100 of the embodiment of this disclosure includes a first network node 101 and a terminal equipment 102. When the terminal equipment 102 needs to perform cell change, the first network node 101 is a source IAB-donor-DU, and is also a target IAB-donor-DU.

In the embodiment of this disclosure, existing services or services that may be implemented in the future may be performed between the first network node 101 and the terminal equipment 102. For example, such services may include but not limited to an enhanced mobile broadband (eMBB), massive machine type communication (mMTC), and ultra-reliable and low-latency communication (URLLC), etc.

Various implementations of the embodiments of this disclosure shall be described below with reference to the accompanying drawings. These implementations are illustrative only, and are not intended to limit this disclosure.

### Embodiment 1

The embodiment of this disclosure provides a method for configuring a cell. This method is applicable to a first network node or a gNB-CU or an IAB-donor-CU connected to the first network node, such as the first network node 102 or the gNB-CU or IAB-donor-CU connected thereto in FIG. 2.

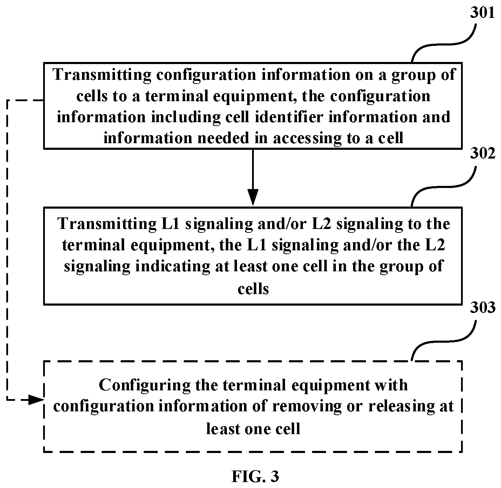

FIG. 3 is a schematic diagram of the method for configuring a cell of embodiment 1 of this disclosure. As shown in FIG. 3, the method includes:
step 301: transmitting configuration information on a group of cells to a terminal equipment, the configuration information including cell identifier information and information needed in accessing to a cell; and
step 302: transmitting L1 signaling and/or L2 signaling to the terminal equipment, the L1 signaling and/or the L2 signaling indicating at least one cell in the group of cells.

Hence, the first network node configures configuration information of a group of cells for the terminal equipment, so that the terminal equipment is able to quickly apply configuration information in the configuration information of the group of cells corresponding to L1 signaling and/or L2 signaling received from the first network node, and change from the serving cell to the cell corresponding to the cell configuration information, thereby lowering latency, signaling overhead and interruption time.

In the embodiments of this disclosure, the cell configuration may also be referred to as cell maintenance.

In step 301, the first network node transmits the configuration information of a group of cells to the terminal equipment, the configuration information including cell identifier information and information needed in accessing to a cell.

In the embodiments of this disclosure, the configuration information of a group of cells may also be referred to as configuration information of a group of candidate cells or configuration information of multiple candidate cells.

In the embodiments of this disclosure, the cell identifier information includes at least one of a cell identifier and a cell index.

For example, the cell identifier includes a physical cell identifier (PCI) or an NR cell global identifier (NCGI).

In the embodiments of this disclosure, the information needed in accessing to a cell includes at least one of timer information and an SSB frequency where the cell is located.

For example, the timer information includes a value of a timer.

For example, the timer includes at least one of the following timers:
a first timer used for cell switch;
a second timer used for radio link detection, such as T310 or a similar timer;
a third timer used for RRC connection reestablishment; and
a fourth timer used for an RRC connection reestablishment request message.

In the embodiments of this disclosure, when the L1 signaling and/or the L2 signaling from the first network node is received, the first timer is started, and/or, when cell switch is completed, the first timer is stopped.

In the embodiments of this disclosure, when the first timer expires, the terminal equipment initiates an RRC connection reestablishment procedure.

In the embodiments of this disclosure, in a case where the information needed in accessing to a cell does not include the SSB frequency of the cell, the terminal equipment continues to use an SSB frequency of a source cell.

In the embodiments of this disclosure, the configuration information further includes at least one of the following: CSI-RS information; downlink timing information; timing advance information used for uplink; dedicated random access resource(s) and/or random access preamble(s); an indication for performing or not performing random access; beam information; a C-RNTI allocated for the terminal equipment; scheduling information of downlink allocation and/or an uplink grant; configured grant information; physical channel configuration; MAC configuration; RLC bearer configuration; PDCP configuration; and radio bearer configuration.

For example, in the embodiments of this disclosure, the configuration information includes a dedicated random access resource and/or a random access preamble and/or an indication on performing random access, and the terminal may initiate a random access procedure to an indicated cell according to the information, and receive and transmit data on the indicated cell after completing the random access.

For another example, in the embodiments of this disclosure, the configuration information includes timing advance information used for uplink and/or an indication on not performing random access, a C-RNTI allocated for the terminal equipment and scheduling information of an uplink grant, and the terminal may transmit feedback or an instruction to the indicated cell according to the information, and transmit and receive data on the indicated cell after receiving the feedback from the network. In this example, the terminal does not initiate a random access procedure on the indicated cell.

In the embodiments of this disclosure, in a case where the target cell and the serving cell are out of synchronization, the configuration information includes downlink timing information.

In the embodiments of this disclosure, when the configuration information does not include physical channel configuration, MAC configuration, RLC bearer configuration, PDCP configuration and radio bearer configuration, the terminal equipment continues to use these configurations of the source cell.

In the embodiments of this disclosure, the configuration information is information specific to a cell in the group of cells or common to some or all cells in the group of cells, and/or, the information needed in accessing to a cell is information specific to a cell in the group of cells or common to some or all cells in the group of cells.

In the embodiments of this disclosure, the configuration information is associated with at least one serving cell of the terminal equipment or associated with at least one area. For example, the terminal equipment deems that the configuration information is applicable or valid in the at least one serving cell or the at least one area. That is, one cell in a group of cells included in the configuration information may be used for cell switch procedure triggered by L1/L2 signaling in the associated serving cell or area, that is, L1/L2 signaling may indicate the cell, or, in other words, the configuration information may be quickly applied in the associated serving cell or area, so as to support the cell switch procedure triggered by L1/L2 signaling.

That is, when the configuration information is associated with at least one serving cell of the terminal equipment, the terminal equipment deems that the configuration information is applicable or valid in the at least one serving cell, and when the configuration information is associated with at least one area, the terminal equipment deems that the configuration information is applicable or valid in the area.

In the embodiments of this disclosure, that the configuration information is associated with at least one serving cell of the terminal equipment includes: that the configuration information further includes cell identifier information of the at least one serving cell of the terminal equipment.

In the embodiments of this disclosure, the cell identifier information includes at least one of a cell identifier and a cell index.

For example, the cell identifier includes a physical cell identifier (PCI) or an NR cell global identifier (NCGI).

In the embodiments of this disclosure, that the configuration information is associated with at least one area includes: that the configuration information further includes at least one area identifier (ID), and according to the area identifier, the terminal equipment determines whether the configuration information is valid. For example, if a cell does not broadcast the area identifier or the broadcast area identifier is not included in the configuration information, the terminal equipment deems that the configuration information is invalid in this cell or is not applicable to this cell; on the contrary, if a cell broadcasts the area identifier and the broadcast area identifier is included in the configuration information, the terminal equipment deems that the configuration information is valid in this cell or is applicable to this cell.

In the embodiments of this disclosure, the cell configuration information is included in a first IE, the first IE including, for example, *CellGroupConfig* and/or *ServingCellConfig.* The first IE may be a new IE that is different from these two IEs and used to configure a group of cells.

In step 302, the first network node transmits the L1 signaling and/or the L2 signaling to the terminal equipment, the L1 signaling and/or the L2 indicating at least one cell in the group of cells.

For example, the L1 signaling and/or the L2 signaling indicate(s) a cell that is included in a group of cells for which the first network device configured the configuration information. The terminal equipment determines which cell in the group of cells is a target cell according to indication(s) of the L1 signaling and/or the L2 signaling.

In the embodiments of this disclosure, when the terminal equipment performs cell switch, the first network node is a source network node, i.e. a network node to which a source cell belongs.

In the embodiments of this disclosure, L1 refers to layer 1, including, for example, a physical layer;
L2 refers to layer 2, including, for example, an MAC layer or MAC sublayer, a PDCP layer or PDCP sublayer, and an RLC layer or RLC sublayer;
and L3 refers to layer 3, including, for example, an RRC layer.

In the embodiments of this disclosure, the cell change (switch) includes at least one of serving cell change (switch), special cell change (switch) and primary cell change (switch).

In the embodiments of this disclosure, the source cell and target cell in the cell switch are synchronous or asynchronous.

In the embodiments of this disclosure, the source cell and target cell in the cell switch are of intra-frequency or inter-frequency.

In the embodiments of this disclosure, the source cell and/or the target cell in the cell switch operate(s) at FR1 or FR2.

In the embodiments of this disclosure, the L1 signaling is downlink control information (DCI).

In the embodiments of this disclosure, the L2 signaling is an MAC CE.

In the embodiments of this disclosure, the L1 signaling indicates at least one of the following:
cell information;
a TCI state ID, such as the L1 signaling reuses existing TCI state ID(s) or is updated DCI based on existing TCI state ID(s);
TA information;
a UE identifier assigned by the target cell for the terminal equipment, such as a C-RNTI;
HARQ feedback information of the L1 signaling; and
scheduling information, such as including a UL grant and/or a DL assignment in the target cell.

In the embodiments of this disclosure, L2 signaling indicates at least one of the following:
cell information;
TCI state identifier (TCI state ID), such as the L2 signaling reuses existing TCI state ID(s) or is updated MAC CE based on existing TCI state ID(s);
TA information;
a UE identifier assigned by the target cell for the terminal equipment, such as a C-RNTI;
HARQ feedback information of L2 signaling; and
scheduling information, such as including a UL grant and/or a DL assignment in the target cell.

For example, the L1 signaling includes at least one of the TCI state ID and the cell identifier information;
for example, the L2 signaling includes at least one of the TCI state ID and the cell identifier information.

In the embodiments of this disclosure, the cell identifier information includes at least one of a cell identifier and a cell index.

For example, the cell identifier includes a physical cell identifier (PCI) or an NR cell global identifier (NCGI).

In the embodiments of this disclosure, L1/L2 is between the terminal equipment (UE) and the gNB-DU, while RRC is between the UE and the gNB-CU. Therefore, in the method of cell configuration, the RRC message of the cell configuration is generated by the gNB-CU and transmitted to the UE via the gNB-DU; and the L1 signaling and/or the L2 signaling may be generated by the gNB-DU and transmitted to the UE.

In the embodiments of this disclosure, as shown in FIG. 3, the method further includes:
step 303: configuring the terminal equipment with configuration information of removing or releasing at least one cell.

In the embodiments of this disclosure, step 303 is optional.

In the embodiments of this disclosure, the configuring the terminal equipment with configuration information of removing or releasing at least one cell includes explicitly or implicitly configuring the terminal equipment with the configuration information of removing or releasing at least one cell.

In the embodiments of this disclosure, the explicitly or implicitly configuring the terminal equipment with the configuration information of removing or releasing at least one cell includes:
configuring a list for the terminal equipment,
the list including cell identifier information included in the configuration information to be removed or released, or,
the list including index information to be removed or released, the index information corresponding to an order of occurrence in the configuration information of the group of cells.

In the embodiments of this disclosure, the implicitly configuring the terminal equipment with the configuration information of removing or releasing at least one cell includes: removing or releasing configuration information of a cell if the configuration information of the cell no longer appears in the configuration information of the group of cells.

In the embodiments of this disclosure, the first network node may execute step 302 based on a received measurement result, i.e. transmitting the L1 signaling and/or the L2 signaling to the terminal equipment, wherein the L1 signaling and/or the L2 signaling indicate(s) at least one cell in the group of cells.

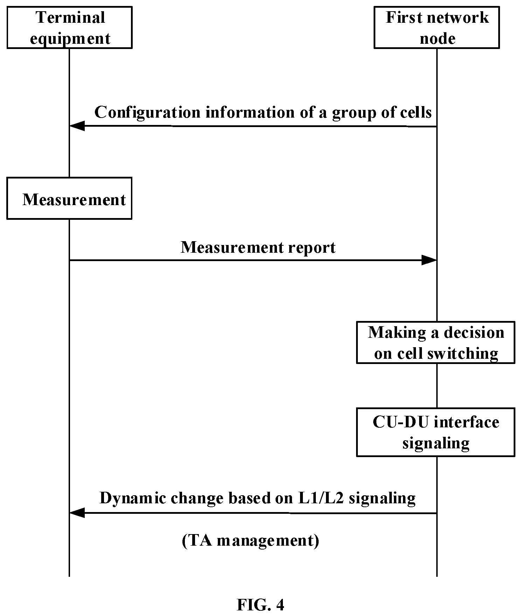

FIG. 4 is a schematic diagram of a basic signaling procedure of cell switch (cell mobility) based on L1 signaling and/or L2 signaling of embodiment 1 of this disclosure. As shown in FIG. 4, the basic signaling procedure includes: transmitting configuration information of a group of cells by the first network node to the terminal equipment, i.e. configuring multiple candidate cells; performing measurement by the terminal equipment; transmitting a measurement report to the first network node; making a decision on switching by the first network node; generating CU-DU interface signaling; and performing dynamic switch via L1/L2 signaling. Furthermore, TA (time alignment) management may be performed.

It can be seen from the above embodiment that the first network node configures configuration information of a group of cells for the terminal equipment, so that the terminal equipment is able to quickly apply configuration information in the configuration information of the group of cells corresponding to L1 signaling and/or L2 signaling received from the first network node, and change from the serving cell to the cell corresponding to the cell configuration information, thereby lowering latency, signaling overhead and interruption time.

### Embodiment 2

The embodiment of this disclosure provides a method for configuring a cell. This method corresponds to the method for configuring a cell applicable to a first network node described in embodiment 1, and reference may be made to the disclosure contained in embodiment 1 for identical or corresponding contents.

This method is applicable to a terminal equipment, such as the terminal equipment 102 in FIG. 2.

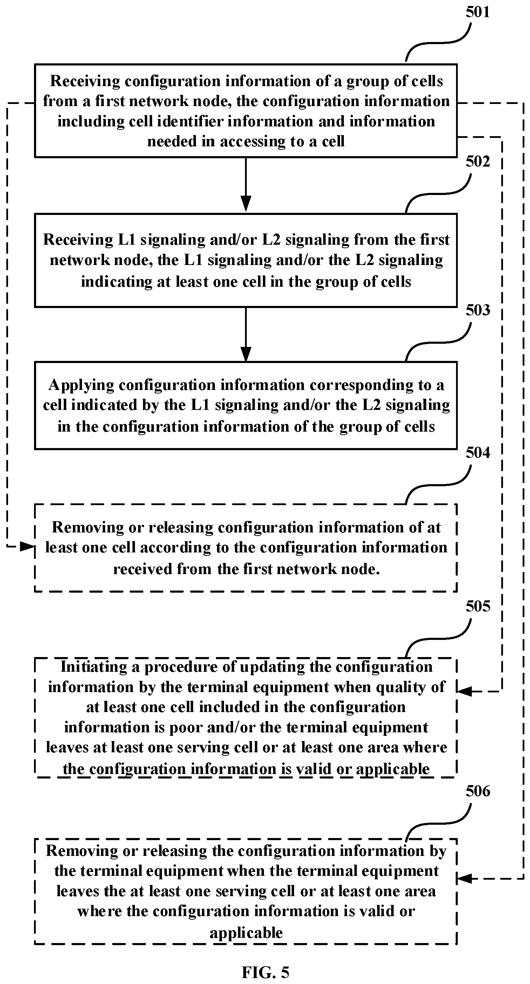

FIG. 5 is a schematic diagram of the method for configuring a cell of embodiment 2 of this disclosure. As shown in FIG. 5, the method includes:
step 501: receiving configuration information of a group of cells from a first network node, the configuration information including cell identifier information and information needed in accessing to a cell;
step 502: receiving L1 signaling and/or L2 signaling from the first network node, the L1 signaling and/or the L2 signaling indicating at least one cell in the group of cells; and
step 503: applying configuration information corresponding to a cell indicated by the L1 signaling and/or the L2 signaling in the configuration information of the group of cells.

In the embodiments of this disclosure, the configuration information of a group of cells may also be referred to as configuration information of a group of candidate cells or configuration information of multiple candidate cells.

In the embodiments of this disclosure, the cell identifier information includes at least one of a cell identifier and a cell index.

For example, the cell identifier includes a physical cell identifier (PCI) or an NR cell global identifier (NCGI).

In the embodiments of this disclosure, the information needed in accessing to a cell includes at least one of timer information and an SSB frequency where the cell is located.

For example, the timer information includes a value of a timer.

For example, the timer includes at least one of the following timers:
a first timer used for cell switch;
a second timer used for radio link detection, such as T310 or a similar timer;
a third timer used for RRC connection reestablishment; and
a fourth timer used for an RRC connection reestablishment request message.

In the embodiments of this disclosure, when the L1 signaling and/or the L2 signaling from the first network node is received, the first timer is started, and/or, when cell switch is completed, the first timer is stopped.

In the embodiments of this disclosure, when the first timer expires, the terminal equipment initiates an RRC connection reestablishment procedure.

In the embodiments of this disclosure, in a case where the information needed in accessing to a cell does not include the SSB frequency of the cell, the terminal equipment continues to use an SSB frequency of a source cell.

In the embodiments of this disclosure, the configuration information further includes at least one of the following: CSI-RS information; downlink timing information; timing advance information used for uplink; dedicated random access resource(s) and/or random access preamble(s); an indication for performing or not performing random access; beam information; a C-RNTI allocated for the terminal equipment; scheduling information of downlink allocation and/or an uplink grant; configured grant information; physical channel configuration; MAC configuration; RLC bearer configuration; PDCP configuration; and radio bearer configuration.

In the embodiments of this disclosure, in a case where the target cell and the serving cell are out of synchronization, the configuration information includes downlink timing information.

In the embodiments of this disclosure, when the configuration information does not include physical channel configuration, MAC configuration, RLC bearer configuration, PDCP configuration and radio bearer configuration, the terminal equipment continues to use these configurations of the source cell.

In the embodiments of this disclosure, the configuration information is information specific to a cell in the group of cells or common to some or all cells in the group of cells, and/or, the information needed in accessing to a cell is information specific to a cell in the group of cells or common to some or all cells in the group of cells.

In the embodiments of this disclosure, the configuration information is associated with at least one serving cell of the terminal equipment or associated with at least one area. For example, the terminal equipment deems that the configuration information is applicable or valid in the at least one serving cell or the at least one area.

That is, when the configuration information is associated with at least one serving cell of the terminal equipment, the terminal equipment deems that the configuration information is applicable or valid in the at least one serving cell, and when the configuration information is associated with at least one area, the terminal equipment deems that the configuration information is applicable or valid in the area.

In the embodiments of this disclosure, that the configuration information is associated with at least one serving cell of the terminal equipment includes: that the configuration information further includes cell identifier information of the at least one serving cell of the terminal equipment.

In the embodiments of this disclosure, that the configuration information is associated with at least one area includes: that the configuration information further includes cell identifier information of the at least one serving cell of the terminal equipment.

In the embodiments of this disclosure, the cell identifier information includes at least one of a cell identifier and a cell index.

For example, the cell identifier includes a physical cell identifier (PCI) or an NR cell global identifier (NCGI).

In the embodiments of this disclosure, that the configuration information is associated with at least one area includes: that the configuration information further includes at least one area identifier (ID).

In the embodiments of this disclosure, the cell configuration information is included in a first IE.

In step 502, the terminal equipment receives the L1 signaling and/or the L2 signaling from the first network node, and in step 503, configuration information in the configuration information of the group of cells corresponding to the cell indicated by the L1 signaling and/or the L2 is applied.

That is, the L1 signaling and/or the L2 signaling correspond(s) the cell configuration information, and the cell configuration information corresponds to the cell.

For example, the L1 signaling and/or the L2 signaling indicate(s) a cell, i.e. corresponding to a cell configuration, the cell is included in the group of cells configured with configuration information by the first network device, and the cell configuration information is included in the configuration information of the group of cells. The terminal equipment determines which cell in a group of cells is a target cell according to an indication/indications of the L1 signaling and/or the L2 signaling, i.e. determining which configuration information in the configuration information of the group of cells is used.

In the embodiments of this disclosure, when the terminal equipment performs cell switch, the first network node is a source network node, i.e. a network node to which a source cell belongs.

In the embodiments of this disclosure, L1 refers to layer 1, including, for example, a physical layer;
L2 refers to layer 2, including, for example, an MAC layer or MAC sublayer, a PDCP layer or PDCP sublayer, and an RLC layer or RLC sublayer;
and L3 refers to layer 3, including, for example, an RRC layer.

In the embodiments of this disclosure, the cell change (switch) includes at least one of serving cell change (switch), special cell change (switch) and primary cell change (switch).

In the embodiments of this disclosure, the source cell and target cell in the cell switch are synchronous or asynchronous.

In the embodiments of this disclosure, the source cell and target cell in the cell switch are of intra-frequency or inter-frequency.

In the embodiments of this disclosure, the source cell and/or the target cell in the cell change operate(s) at FR1 or FR2.

In the embodiments of this disclosure, the L1 signaling is downlink control information (DCI).

In the embodiments of this disclosure, the L2 signaling is an MAC CE.

In the embodiments of this disclosure, the L1 signaling indicates at least one of the following:
cell information;
a TCI state ID, such as the L1 signaling reuses existing TCI state ID(s) or is updated DCI based on existing TCI state ID(s);
TA information;
a UE identifier assigned by the target cell for the terminal equipment, such as a C-RNTI;
HARQ feedback information of the L1 signaling; and
scheduling information, such as including a UL grant and/or a DL assignment in the target cell.

In the embodiments of this disclosure, L2 signaling indicates at least one of the following:
cell information;
TCI state identifier (TCI state ID), such as the L2 signaling reuses existing TCI state ID(s) or is updated MAC CE based on existing TCI state ID(s);
TA information;
a UE identifier assigned by the target cell for the terminal equipment, such as a C-RNTI;
HARQ feedback information of L2 signaling; and
scheduling information, such as including a UL grant and/or a DL assignment in the target cell.

For example, the L1 signaling includes at least one of the TCI state ID and the cell identifier information;
for example, the L2 signaling includes at least one of the TCI state ID and the cell identifier information.

In the embodiments of this disclosure, the cell identifier information includes at least one of a cell identifier and a cell index.

For example, the cell identifier includes a physical cell identifier (PCI) or an NR cell global identifier (NCGI).

In the embodiments of this disclosure, as shown in FIG. 4, the method further includes:
step 504: removing or releasing configuration information of at least one cell according to the configuration information received from the first network node.

In the embodiments of this disclosure, the removing or releasing configuration information of at least one cell according to the configuration information received from the first network node includes:
receiving a list from the first network node,
the list including cell identifier information included in the configuration information to be removed or released, or,
the list including index information to be removed or released, the index information corresponding to an order of occurrence in the configuration information of the group of cells.

In the embodiments of this disclosure, the removing or releasing configuration information of at least one cell according to the configuration information received from the first network node further includes at least one of the following:
removing or releasing configuration information of a cell by the terminal equipment when the cell is included in the list;
removing or releasing configuration information of a cell when cell identifier information of the cell is included in the list; and
removing or releasing configuration information of a cell when index information of the cell is included in the list.

In the embodiments of this disclosure, the removing or releasing configuration information of at least one cell according to the configuration information received from the first network node includes:
removing or releasing configuration information of a cell when configuration information of the cell no longer appears in the configuration information of the group of cells.

In the embodiments of this disclosure, as shown in FIG. 5, the method further includes:
step 505: initiating a procedure of updating the configuration information by the terminal equipment when quality of at least one cell included in the configuration information is poor and/or the terminal equipment leaves at least one serving cell or at least one area where the configuration information is valid or applicable.

In the embodiments of this disclosure, as shown in FIG. 5, the method further includes:
step 506: removing or releasing the configuration information by the terminal equipment when the terminal equipment leaves the at least one serving cell or at least one area where the configuration information is valid or applicable.

In the embodiments of this disclosure, regarding step 505 and step 506, that when the terminal equipment leaves at least one serving cell where the configuration information is valid or applicable refers to that the serving cell of the terminal equipment is not a cell in at least one serving cell with which the configuration information is associated, and/or, that when the terminal equipment leaves at least one area where the configuration information is valid or applicable refers to that the serving cell of the terminal equipment is not in at least one area with which the configuration information is associated, or the serving cell of the terminal equipment does not broadcast an area identifier included in the configuration.

In the embodiments of this disclosure, step 504, step 505 and step 506 are optional, and one or more of them may be performed, or step 504, step 505 and step 506 may not be executed.

It can be seen from the above embodiment that the first network node configures configuration information of a group of cells for the terminal equipment, so that the terminal equipment is able to quickly apply configuration information in the configuration information of the group of cells corresponding to L1 signaling and/or L2 signaling received from the first network node, and change from the serving cell to the cell corresponding to the cell configuration information, thereby lowering latency, signaling overhead and interruption time.

### Embodiment 3

The embodiment of this disclosure provides a method for configuring and changing a cell. This method is applicable to a terminal equipment and a first network node, and corresponds to the method for configuring a cell applicable to a first network node described in embodiment 1 and the method for configuring a cell applicable to a terminal equipment described in embodiment 2, with identical or corresponding contents being not going to be repeated herein any further.

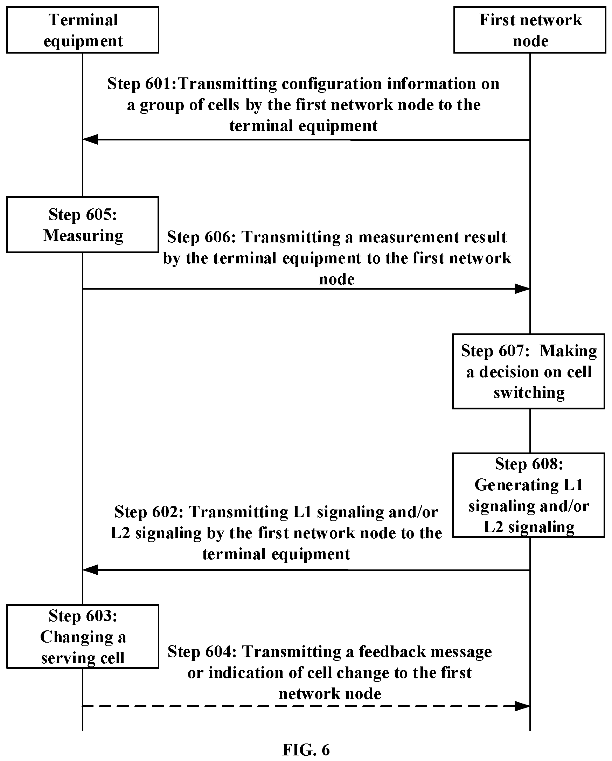

FIG. 6 is a schematic diagram of the method for configuring and changing a cell of embodiment 3 of this disclosure, applicable to a terminal equipment and a first network node. As shown in FIG. 6, the method includes:
step 601: transmitting configuration information on a group of cells by the first network node to the terminal equipment, the configuration information including cell identifier information and information needed in accessing to a cell;
step 602: transmitting L1 signaling and/or L2 signaling by the first network node to the terminal equipment; and
step 603: changing from a serving cell to a cell indicated by the L1 signaling and/or the L2 signaling in the group of cells by the terminal equipment.

In the embodiments of this disclosure, as shown in FIG. 6, the method may further include:
step 604: transmitting a feedback message or indication of cell change to the first network node.

In the embodiments of this disclosure, as shown in FIG. 6, the method may further include:
step 605: performing measurement by the terminal equipment;
step 606: transmitting a measurement result by the terminal equipment to the first network node;
step 607: making a decision on performing switching based on the L1 signaling and/or the L2 signaling by the first network node; and
step 608: generating the L1 signaling and/or the L2 signaling by the first network node.
Step 604, step 605, step 606, step 607 and step 608 are optional.

In the embodiment of this disclosure, reference may be made to the disclosure contained in embodiment 1 and embodiment 2 for implementations of steps 601-608, which shall not be repeated herein any further.

It can be seen from the above embodiment that the first network node configures configuration information of a group of cells for the terminal equipment, so that the terminal equipment is able to quickly apply configuration information in the configuration information of the group of cells corresponding to L1 signaling and/or L2 signaling received from the first network node, and change from the serving cell to the cell corresponding to the cell configuration information, thereby lowering latency, signaling overhead and interruption time.

### Embodiment 4

The embodiment of this disclosure provides a method for configuring a cell. This method is applicable to a first network node, such as the first network node 101 in FIG. 2.

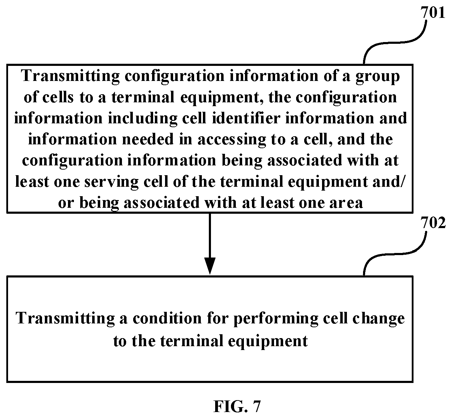

FIG. 7 is a schematic diagram of the method for configuring a cell of embodiment 4 of this disclosure. As shown in FIG. 7, the method includes:
step 701: transmitting configuration information of a group of cells to a terminal equipment, the configuration information including cell identifier information and information needed in accessing to a cell, and the configuration information being associated with at least one serving cell of the terminal equipment and/or being associated with at least one area; and
step 702: transmitting a condition for performing cell change to the terminal equipment.

Hence, in performing cell change within the area, the terminal equipment may maintain the configuration information, and when the terminal equipment leaves the at least one serving cell or the at least one area associated with the configuration information, it releases or removes the configuration information, thereby lowering latency, signaling overhead and interruption time.

In the embodiments of this disclosure, the terminal equipment deems that the configuration information is applicable or valid in the at least one serving cell and/or the at least one area.

In the embodiments of this disclosure, the configuration information is associated with at least one serving cell of the terminal equipment or associated with at least one area. For example, the terminal equipment deems that the configuration information is applicable or valid in the at least one serving cell or the at least one area. That is, a cell in the group of cells included in the configuration information may be used in the associated serving cell or area for a cell switch procedure triggered by L1/L2 signaling, i.e. L1/L2 signaling may indicate the cell, or the configuration information may be quickly applied in the associated serving cell or area, so as to support the cell switch procedure triggered by L1/L2 signaling.

That is, when the configuration information is associated with at least one serving cell of the terminal equipment, the terminal equipment deems that the configuration information is applicable or valid in the at least one serving cell, and when the configuration information is associated with at least one area, the terminal equipment deems that the configuration information is applicable or valid in the area.

In the embodiments of this disclosure, that the configuration information is associated with at least one serving cell of the terminal equipment includes: that the configuration information further includes cell identifier information of the at least one serving cell of the terminal equipment.

In the embodiments of this disclosure, the cell identifier information includes at least one of a cell identifier and a cell index.

For example, the cell identifier includes a physical cell identifier (PCI) or an NR cell global identifier (NCGI).

In the embodiments of this disclosure, that the configuration information is associated with at least one area includes: that the configuration information further includes at least one area identifier (ID), and according to the area identifier, the terminal equipment determines whether the configuration information is valid. For example, if a cell does not broadcast the area identifier or the broadcast area identifier is not included in the configuration information, the terminal equipment deems that the configuration information is invalid in this cell or is not applicable to this cell; on the contrary, if a cell broadcasts the area identifier and the broadcast area identifier is included in the configuration information, the terminal equipment deems that the configuration information is valid in this cell or is applicable to this cell.

In the embodiments of this disclosure, the cell change (switch) includes at least one of serving cell change (switch), special cell change (switch) and primary cell change (switch).

In the embodiments of this disclosure, the source cell and target cell in the cell switch are synchronous or asynchronous.

In the embodiments of this disclosure, the source cell and target cell in the cell switch are of intra-frequency or inter-frequency.

In the embodiments of this disclosure, the source cell and/or the target cell in the cell change operate(s) at FR1 or FR2.

In the embodiments of this disclosure, the condition for performing cell change is used for terminal equipments to evaluate whether the execution condition is satisfied to perform CHO or CPA or CPC of handover.

It can be seen from the above embodiment that in performing cell change within the area associated with the configuration information, the terminal equipment may maintain the configuration information, and when the terminal equipment leaves the at least one serving cell or the at least one area associated with the configuration information, it releases or removes the configuration information, thereby lowering latency, signaling overhead and interruption time.

### Embodiment 5

The embodiment of this disclosure provides a method for configuring a cell. This method corresponds to the method for configuring a cell applicable to a first network node described in embodiment 4, and reference may be made to the disclosure contained in embodiment 1 for identical or corresponding contents.

This method is applicable to a terminal equipment, such as the terminal equipment 102 in FIG. 2.

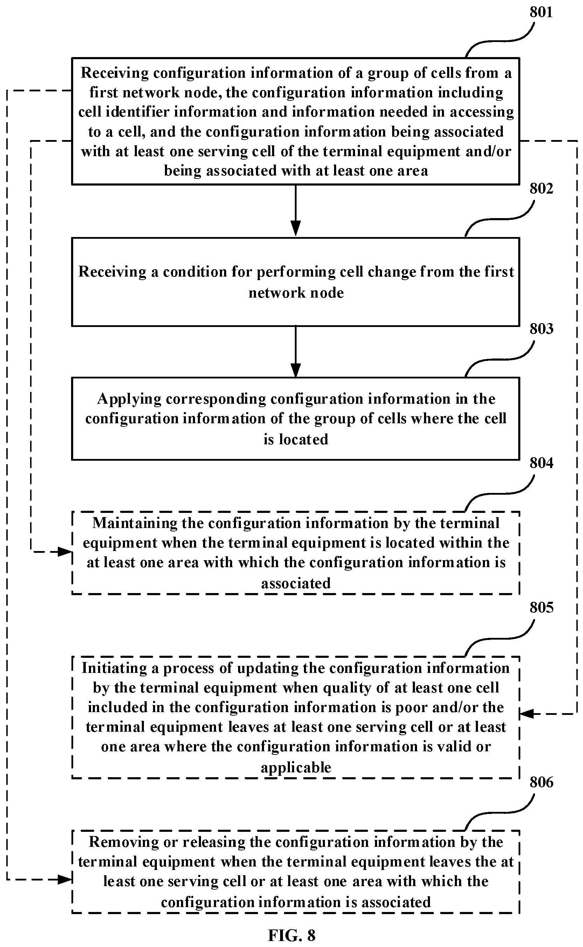

FIG. 8 is a schematic diagram of the method for configuring a cell of embodiment 5 of this disclosure. As shown in FIG. 8, the method includes:
step 801: receiving configuration information of a group of cells from a first network node, the configuration information including cell identifier information and information needed in accessing to a cell, and the configuration information being associated with at least one serving cell of the terminal equipment and/or being associated with at least one area;
step 802: receiving a condition for performing cell change from the first network node; and
step 803: applying corresponding configuration information in the configuration information of the group of cells where the cell is located.

In the embodiments of this disclosure, the terminal equipment deems that the configuration information is applicable or valid in the at least one serving cell and/or the at least one area.

In the embodiments of this disclosure, that the configuration information is associated with at least one serving cell of the terminal equipment includes: that the configuration information further includes cell identifier information of at least one serving cell of the terminal equipment.

In the embodiments of this disclosure, the cell identifier information includes at least one of a cell identifier and a cell index.

For example, the cell identifier includes a physical cell identifier (PCI) or an NR cell global identifier (NCGI).

In the embodiments of this disclosure, that the configuration information is associated with at least one area includes: that the configuration information further includes at least one area identifier.

In the embodiments of this disclosure, in step 803, according to the condition for performing cell change, the terminal equipment evaluates whether the execution condition is satisfied to perform CHO or CPA or CPC of handover.

In the embodiments of this disclosure, as shown in FIG. 8, the method further includes:
step 804: maintaining the configuration information by the terminal equipment when the terminal equipment is located within the at least one area with which the configuration information is associated.

In the embodiments of this disclosure, as shown in FIG. 8, the method further includes:
step 805: initiating a procedure of updating the configuration information by the terminal equipment when quality of at least one cell included in the configuration information is poor and/or the terminal equipment leaves at least one serving cell or at least one area where the configuration information is valid or applicable.

In the embodiments of this disclosure, as shown in FIG. 8, the method further includes:
step 806: removing or releasing the configuration information by the terminal equipment when the terminal equipment leaves the at least one serving cell or at least one area with which the configuration information is associated.

In the embodiments of this disclosure, that when the terminal equipment leaves the at least one serving cell with which the configuration information is associated refers to that the serving cell of the terminal equipment is not a cell in the at least one serving cell with which the configuration information is associated, and/or, that when the terminal equipment leaves the at least one area with which the configuration information is associated refers to that the serving cell of the terminal equipment is not in the at least one area with which the configuration information is associated, or the serving cell of the terminal equipment does not broadcast the area identifier included in the configuration.

In the embodiments of this disclosure, step 804, step 805 and step 806 are optional, and one or more of them may be performed, or step 5804, step 805 and step 806 may not be executed.

It can be seen from the above embodiment that in performing cell change within the area with which the configuration information is associated, the terminal equipment is able to maintain the configuration information, and when the terminal equipment leaves the at least one serving cell or the at least one area with which the configuration information is associated, the terminal equipment releases or removes the configuration information, thereby lowering latency, signaling overhead and interruption time.

### Embodiment 6

The embodiment of this disclosure provides a method for configuring a cell. This method is applicable to a terminal equipment and a first network node, and corresponds to the method for configuring a cell applicable to a first network node described in embodiment 4 and the method for configuring a cell applicable to a terminal equipment described in embodiment 5, with identical contents being not going to be repeated herein any further.

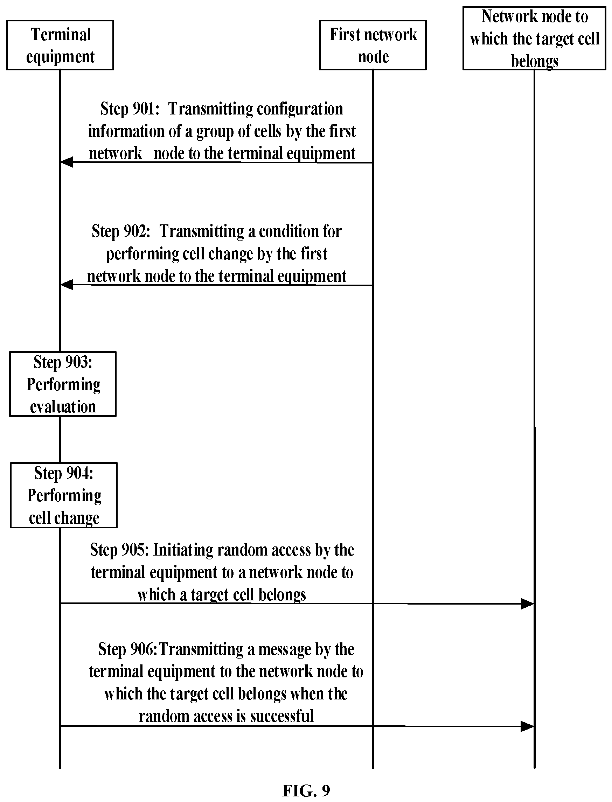

FIG. 9 is a schematic diagram of the method for configuring and changing a cell of embodiment 6 of this disclosure, applicable to a terminal equipment and a first network node. As shown in FIG. 9, the method includes:
step 901: transmitting configuration information of a group of cells by the first network node to the terminal equipment, the configuration information including cell identifier information and information needed in accessing to a cell, and the configuration information being associated with at least one serving cell of the terminal equipment and/or being associated with at least one area;
step 902: transmitting a condition for performing cell change by the first network node to the terminal equipment;
step 903: performing evaluation by the terminal equipment to determine whether a cell in the group of cells satisfies the condition for performing cell change;
step 904: performing cell change by the terminal equipment when a cell in the group of cells satisfies the condition;
step 905: initiating random access by the terminal equipment to a network node to which a target cell belongs; for example, the network node to which the target cell belongs may be a second network node, or may also be the first network node; and
step 906: transmitting a message by the terminal equipment to the network node to which the target cell belongs when the random access is successful.

In the embodiments of this disclosure, reference may be made to the disclosure contained in embodiment 4 and embodiment 5 for implementations of steps 901-906, which shall not be repeated herein any further.

It can be seen from the above embodiment that in performing cell change within the area with which the configuration information is associated, the terminal equipment is able to maintain the configuration information, and when the terminal equipment leaves the at least one serving cell or the at least one area with which the configuration information is associated, the terminal equipment releases or removes the configuration information, thereby lowering latency, signaling overhead and interruption time.

### Embodiment 7

The embodiment of this disclosure provides an apparatus for configuring a cell, applicable to a first network node. As a principle of the apparatus for solving problems is similar to that of the method in embodiment 1, reference may be made to the implementation of the method described in embodiment 1 for implementation of the apparatus, with identical or related contents being not going to be described herein any further.

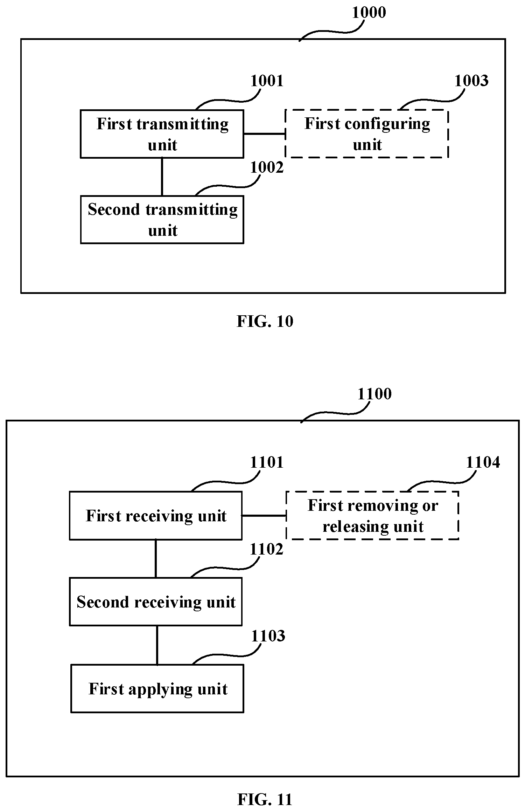

FIG. 10 is a schematic diagram of the apparatus for configuring a cell of embodiment 7 of this disclosure. As shown in FIG. 10, the apparatus 1000 includes:
a first transmitting unit 1001 configured to transmit configuration information on a group of cells to a terminal equipment, the configuration information including cell identifier information and information needed in accessing to a cell; and
a second transmitting unit 1002 configured to transmit L1 signaling and/or L2 signaling to the terminal equipment, the L1 signaling and/or the L2 signaling indicating at least one cell in the group of cells.

In the embodiments of this disclosure, the cell identifier information includes at least one of a cell identifier and a cell index.

In the embodiments of this disclosure, the cell identifier includes a physical cell identifier (PCI) or an NR cell global identifier (NCGI).

In the embodiments of this disclosure, the information needed in accessing to a cell includes at least one of timer information and an SSB frequency where the cell is located.

In the embodiments of this disclosure, the timer information includes a value of a timer.

In the embodiments of this disclosure, the timer includes at least one of the following timers:
a first timer used for cell switch;
a second timer used for radio link detection, such as T310 or a similar timer;
a third timer used for RRC connection reestablishment; and
a fourth timer used for an RRC connection reestablishment request message.

In the embodiments of this disclosure, when the L1 signaling and/or the L2 signaling is/are received, the first timer is started, and/or, when cell switch is completed, the first timer is stopped.

In the embodiments of this disclosure, when the first timer expires, the terminal equipment initiates an RRC connection reestablishment procedure.

In the embodiments of this disclosure, the configuration information further includes at least one of the following: CSI-RS information; downlink timing information; timing advance information used for uplink; dedicated random access resource(s) and/or random access preamble(s); an indication for performing or not performing random access; beam information; a C-RNTI allocated for the terminal equipment; scheduling information of downlink allocation and/or an uplink grant; configured grant information; physical channel configuration; MAC configuration; RLC bearer configuration; PDCP configuration; and radio bearer configuration.

In the embodiments of this disclosure, the configuration information is information specific to a cell in the group of cells or common to some or all cells in the group of cells, and/or,
the information needed in accessing to a cell is information specific to a cell in the group of cells or common to the group of cells.

In the embodiments of this disclosure, the configuration information is associated with at least one serving cell of the terminal equipment or associated with at least one area.

In the embodiments of this disclosure, the terminal equipment deems that the configuration information is applicable or valid in the at least one serving cell or the at least one area.

In the embodiments of this disclosure, that the configuration information is associated with at least one serving cell of the terminal equipment includes:
that the configuration information further includes cell identifier information of the at least one serving cell of the terminal equipment.

In the embodiments of this disclosure, that the configuration information is associated with at least one area includes:
that the configuration information further includes at least one area identifier (ID).

In the embodiments of this disclosure, the cell configuration information is included in a first IE.

In the embodiments of this disclosure, the L1 signaling is DCI, and/or, the L2 signaling is an MAC CE.

In the embodiments of this disclosure, the L1 signaling and/or the L2 signaling include(s) at least one of the TCI state ID and the cell identifier information.

In the embodiments of this disclosure, as shown in FIG. 10, the apparatus further includes:
a first configuring unit 1003 configured to configure the terminal equipment with configuration information of removing or releasing at least one cell.

In the embodiments of this disclosure, the first configuring unit 1003 explicitly or implicitly configures the terminal equipment with the configuration information of removing or releasing at least one cell.

In the embodiments of this disclosure, the explicitly or implicitly configuring the terminal equipment with the configuration information of removing or releasing at least one cell includes:
configuring a list for the terminal equipment,
the list including cell identifier information included in the configuration information to be removed or released, or,
the list including index information to be removed or released, the index information corresponding to an order of occurrence in the configuration information of the group of cells.

In the embodiments of this disclosure, the implicitly configuring the terminal equipment with the configuration information of removing or releasing at least one cell includes: removing or releasing configuration information of a cell if the configuration information of the cell no longer appears in the configuration information of the group of cells.

In the embodiments of this disclosure, the first network node is a source network node or a source network unit or a network unit to which a source network unit is connected.

It can be seen from the above embodiment that the first network node configures configuration information of a group of cells for the terminal equipment, so that the terminal equipment is able to quickly apply configuration information in the configuration information of the group of cells corresponding to L1 signaling and/or L2 signaling received from the first network node, and change from the serving cell to the cell corresponding to the cell configuration information, thereby lowering latency, signaling overhead and interruption time.

### Embodiment 8

The embodiment of this disclosure provides an apparatus for configuring a cell, applicable to a terminal equipment. As a principle of the apparatus for solving problems is similar to that of the method in embodiment 2, reference may be made to the implementation of the method described in embodiment 2 for implementation of the apparatus, with identical or related contents being not going to be described herein any further.

FIG. 11 is a schematic diagram of the apparatus for configuring a cell of embodiment 8 of this disclosure. As shown in FIG. 11, an apparatus 1100 includes:
a first receiving unit 1101 configured to receive configuration information of a group of cells from a first network node, the configuration information including cell identifier information and information needed in accessing to a cell;
a second receiving unit 1102 configured to receive L1 signaling and/or L2 signaling from the first network node, the L1 signaling and/or the L2 signaling indicating at least one cell in the group of cells; and
a first applying unit 1103 configured to apply configuration information corresponding to a cell indicated by the L1 signaling and/or the L2 signaling in the configuration information of the group of cells.

In the embodiments of this disclosure, the cell identifier information includes at least one of a cell identifier and a cell index.

In the embodiments of this disclosure, the cell identifier includes a physical cell identifier (PCI) or an NR cell global identifier (NCGI).

In the embodiments of this disclosure, the information needed in accessing to a cell includes at least one of timer information and an SSB frequency where the cell is located.

In the embodiments of this disclosure, the timer information includes a value of a timer.

In the embodiments of this disclosure, the timer includes at least one of the following timers:
a first timer used for cell switch;
a second timer used for radio link detection, such as T310 or a similar timer;
a third timer used for RRC connection reestablishment; and
a fourth timer used for an RRC connection reestablishment request message.

In the embodiments of this disclosure, when the L1 signaling and/or the L2 signaling is/are received, the first timer is started, and/or,
when cell switch is completed, the first timer is stopped.

In the embodiments of this disclosure, when the first timer expires, the terminal equipment initiates an RRC connection reestablishment procedure.

In the embodiments of this disclosure, the configuration information further includes at least one of the following: CSI-RS information; downlink timing information; timing advance information used for uplink; dedicated random access resource(s) and/or random access preamble(s); an indication for performing or not performing random access; beam information; a C-RNTI allocated for the terminal equipment; scheduling information of downlink allocation and/or an uplink grant; configured grant information; physical channel configuration; MAC configuration; RLC bearer configuration; PDCP configuration; and radio bearer configuration.

In the embodiments of this disclosure, the configuration information is information specific to a cell in the group of cells or common to some or all cells in the group of cells, and/or,
the information needed in accessing to a cell is information specific to a cell in the group of cells or common to the group of cells.

In the embodiments of this disclosure, the configuration information is associated with at least one serving cell of the terminal equipment or associated with at least one area.

In the embodiments of this disclosure, the terminal equipment deems that the configuration information is applicable or valid in the at least one serving cell or the at least one area.

In the embodiments of this disclosure, that the configuration information is associated with at least one serving cell of the terminal equipment includes:
that the configuration information further includes cell identifier information of the at least one serving cell of the terminal equipment.

In the embodiments of this disclosure, that the configuration information is associated with at least one area includes:
that the configuration information further includes at least one area identifier.

In the embodiments of this disclosure, the cell configuration information is included in a first IE.

In the embodiments of this disclosure, the L1 signaling is DCI, and/or, the L2 signaling is an MAC CE.

In the embodiments of this disclosure, the L1 signaling and/or the L2 signaling include(s) at least one of the TCI state ID and the cell identifier information.

In the embodiments of this disclosure, as shown in FIG. 11, the apparatus further includes:
a first removing or releasing unit 1104 configured to remove or release configuration information of at least one cell according to the configuration information received from the first network node.

In the embodiments of this disclosure, the removing or releasing configuration information of at least one cell according to the configuration information received from the first network node includes:
receiving a list from the first network node,
the list including cell identifier information included in the configuration information to be removed or released, or,
the list including index information to be removed or released, the index information corresponding to an order of occurrence in the configuration information of the group of cells.

In the embodiments of this disclosure, the removing or releasing configuration information of at least one cell according to the configuration information received from the first network node further includes at least one of the following:
removing or releasing configuration information of a cell by the terminal equipment when the cell is included in the list;
removing or releasing configuration information of a cell when cell identifier information of the cell is included in the list; and
removing or releasing configuration information of a cell when index information of the cell is included in the list.

In the embodiments of this disclosure, the removing or releasing configuration information of at least one cell according to the configuration information received from the first network node includes:
removing or releasing configuration information of a cell when configuration information of the cell no longer appears in the configuration information of the group of cells.

In the embodiments of this disclosure, the terminal equipment initiates a procedure of updating the configuration information when quality of at least one cell included in the configuration information is poor and/or the terminal equipment leaves at least one serving cell or at least one area where the configuration information is valid or applicable.

In the embodiments of this disclosure, the terminal equipment removes or releases the configuration information when the terminal equipment leaves the at least one serving cell or at least one area where the configuration information is valid or applicable.

In the embodiments of this disclosure, that when the terminal equipment leaves at least one serving cell where the configuration information is valid or applicable refers to that the serving cell of the terminal equipment is not a cell in at least one serving cell with which the configuration information is associated, and/or, that when the terminal equipment leaves at least one area where the configuration information is valid or applicable refers to that the serving cell of the terminal equipment is not in at least one area with which the configuration information is associated, or the serving cell of the terminal equipment does not broadcast an area identifier included in the configuration.

It can be seen from the above embodiment that the first network node configures configuration information of a group of cells for the terminal equipment, so that the terminal equipment is able to quickly apply configuration information in the configuration information of the group of cells corresponding to L1 signaling and/or L2 signaling received from the first network node, and change from the serving cell to the cell corresponding to the cell configuration information, thereby lowering latency, signaling overhead and interruption time.

### Embodiment 9

The embodiment of this disclosure provides an apparatus for configuring a cell, applicable to a first network node. As a principle of the apparatus for solving problems is similar to that of the method in embodiment 4, reference may be made to the implementation of the method described in embodiment 4 for implementation of the apparatus, with identical or related contents being not going to be described herein any further.

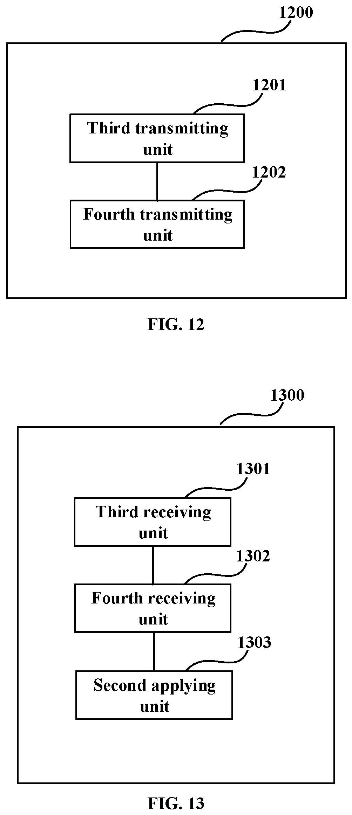

FIG. 12 is a schematic diagram of the apparatus for configuring a cell of embodiment 9 of this disclosure. As shown in FIG. 12, an apparatus 1200 includes:
a third transmitting unit 1201 configured to transmit configuration information of a group of cells to a terminal equipment, the configuration information including cell identifier information and information needed in accessing to a cell, and the configuration information being associated with at least one serving cell of the terminal equipment and/or being associated with at least one area; and
a fourth transmitting unit 1202 configured to transmit a condition for performing cell change to the terminal equipment.

In the embodiments of this disclosure, the terminal equipment deems that the configuration information is applicable or valid in the at least one serving cell or the at least one area.

In the embodiments of this disclosure, that the configuration information is associated with at least one serving cell of the terminal equipment includes:
that the configuration information further includes cell identifier information of at least one serving cell of the terminal equipment.

In the embodiments of this disclosure, the cell identifier information includes at least one of a cell identifier and a cell index.

In the embodiments of this disclosure, the cell identifier includes a physical cell identifier (PCI) or an NR cell global identifier (NCGI).

In the embodiments of this disclosure, that the configuration information is associated with at least one area includes:
that the configuration information further comprises at least one area identifier.

It can be seen from the above embodiment that in performing cell change within the area associated with the configuration information, the terminal equipment may maintain the configuration information, and when the terminal equipment leaves the at least one serving cell or the at least one area associated with the configuration information, it releases or removes the configuration information, thereby lowering latency, signaling overhead and interruption time.

### Embodiment 10

The embodiment of this disclosure provides an apparatus for configuring a cell, applicable to a terminal equipment. As a principle of the apparatus for solving problems is similar to that of the method in embodiment 5, reference may be made to the implementation of the method described in embodiment 5 for implementation of the apparatus, with identical or related contents being not going to be described herein any further.

FIG. 13 is a schematic diagram of the apparatus for configuring a cell of embodiment 10 of this disclosure. As shown in FIG. 13, an apparatus 1300 includes:
a third receiving unit 1301 configured to receive configuration information of a group of cells from a first network node, the configuration information including cell identifier information and information needed in accessing to a cell, and the configuration information being associated with at least one serving cell of the terminal equipment and/or being associated with at least one area;
a fourth receiving unit 1302 configured to receive a condition for performing cell change from the first network node; and
a second applying unit 1303 configured to apply corresponding configuration information in the configuration information of the group of cells where the cell is located when a cell in the group of cells satisfies the condition.

In the embodiments of this disclosure, the terminal equipment deems that the configuration information is applicable or valid in the at least one serving cell and/or the at least one area.

In the embodiments of this disclosure, that the configuration information is associated with at least one serving cell of the terminal equipment includes:
that the configuration information further includes cell identifier information of at least one serving cell of the terminal equipment.

In the embodiments of this disclosure, the cell identifier information includes at least one of a cell identifier and a cell index.

In the embodiments of this disclosure, the cell identifier includes a physical cell identifier (PCI) or an NR cell global identifier (NCGI).

In the embodiments of this disclosure, that the configuration information is associated with at least one area includes:
that the configuration information further includes at least one area identifier.

In the embodiments of this disclosure, the terminal equipment maintains the configuration information when the terminal equipment is located within the at least one area with which the configuration information is associated.

In the embodiments of this disclosure, the terminal equipment initiates a procedure of updating the configuration information when quality of at least one cell included in the configuration information is poor and/or the terminal equipment leaves at least one serving cell or at least one area where the configuration information is valid or applicable.

In the embodiments of this disclosure, the terminal equipment removes or releases the configuration information when the terminal equipment leaves the at least one serving cell or at least one area with which the configuration information is associated.

In the embodiments of this disclosure, that when the terminal equipment leaves the at least one serving cell with which the configuration information is associated refers to that the serving cell of the terminal equipment is not a cell in the at least one serving cell with which the configuration information is associated, and/or, that when the terminal equipment leaves the at least one area with which the configuration information is associated refers to that the serving cell of the terminal equipment is not in the at least one area with which the configuration information is associated, or the serving cell of the terminal equipment does not broadcast the area identifier included in the configuration.

It can be seen from the above embodiment that in performing cell change within the area with which the configuration information is associated, the terminal equipment is able to maintain the configuration information, and when the terminal equipment leaves the at least one serving cell or the at least one area with which the configuration information is associated, the terminal equipment releases or removes the configuration information, thereby lowering latency, signaling overhead and interruption time.

### Embodiment 11

The embodiment of this disclosure provides a network node, including the apparatus for configuring a cell as described in embodiment 7 or embodiment 9.

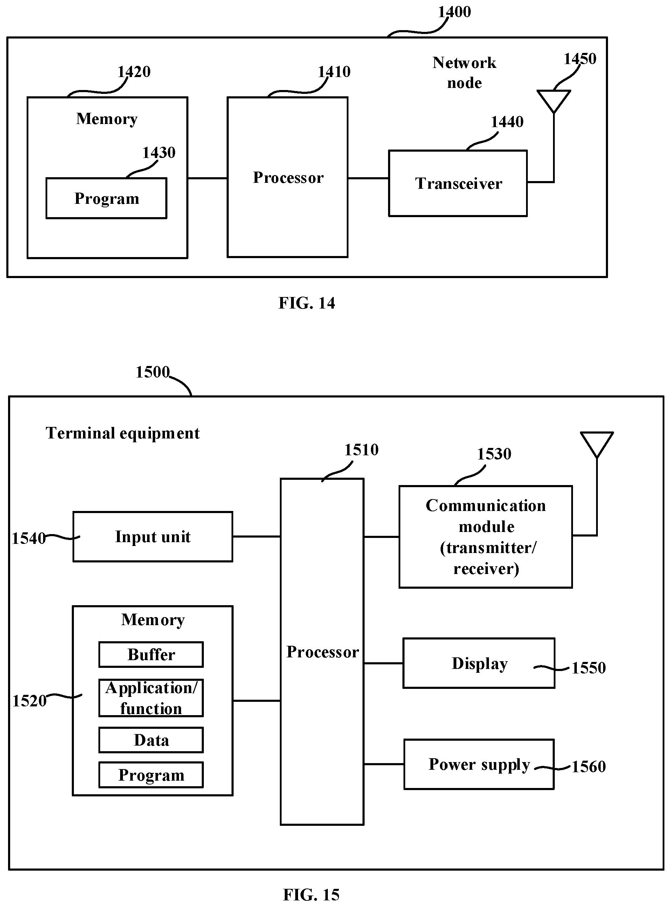

FIG. 14 is a block diagram of a systematic structure of the network node of embodiment 11 of this disclosure. As shown in FIG. 14, a network node 1400 may include a processor 1410 and a memory 1420, the memory 1420 being coupled to the processor 1410. The memory 1420 may store various data, and furthermore, it may store a program 1430 for information processing, and execute the program 1430 under control of the processor 1410, so as to receive various information transmitted by a terminal equipment, and transmit various information to the terminal equipment.

In one implementation, the functions of the apparatus for configuring a cell may be integrated into the processor 1410.

Corresponding to embodiment 7, the processor 1410 may be configured to: transmit configuration information on a group of cells to a terminal equipment, the configuration information including cell identifier information and information needed in accessing to a cell; and transmit L1 signaling and/or L2 signaling to the terminal equipment, the L1 signaling and/or the L2 signaling indicating at least one cell in the group of cells.

Corresponding to embodiment 9, the processor 1410 may be configured to: transmit configuration information of a group of cells to a terminal equipment, the configuration information including cell identifier information and information needed in accessing to a cell, and the configuration information being associated with at least one serving cell of the terminal equipment and/or being associated with at least one area; and transmit a condition for performing cell change to the terminal equipment.

In another implementation, the apparatus for configuring a cell and the processor 1410 may be configured separately; for example, the apparatus for configuring a cell may be configured as a chip connected to the processor 1410, and the functions of the apparatus for configuring a cell are executed under control of the processor 1410.

Furthermore, as shown in FIG. 14, the network node 1400 may include a transceiver 1440, and an antenna 1450, etc. Functions of the above components are similar to those in the related art, and shall not be described herein any further. It should be noted that the network node 1400 does not necessarily include all the parts shown in FIG. 14, and furthermore, the network node 1400 may include parts not shown in FIG. 14, and the related art may be referred to.

It can be seen from the above embodiment that the first network node configures configuration information of a group of cells for the terminal equipment, so that the terminal equipment is able to quickly apply configuration information in the configuration information of the group of cells corresponding to L1 signaling and/or L2 signaling received from the first network node, and change from the serving cell to the cell corresponding to the cell configuration information, thereby lowering latency, signaling overhead and interruption time.

### Embodiment 12

The embodiment of this disclosure provides a terminal equipment, including the apparatus for configuring a cell as described in embodiment 8 or embodiment 10.

FIG. 15 is a block diagram of a systematic structure of the terminal equipment of embodiment 12 of this disclosure. As shown in FIG. 15, a terminal equipment 1500 may include a processor 1510 and a memory 1520, the memory 1520 storing data and a program and being coupled to the processor 1510. It should be noted that this figure is illustrative only, and other types of structures may also be used, so as to supplement or replace this structure and achieve a telecommunications function or other functions.

In one implementation, the functions of the apparatus for configuring a cell may be integrated into the processor 1510.

Corresponding to embodiment 8, the processor 1510 may be configured to: receive configuration information of a group of cells from a first network node, the configuration information including cell identifier information and information needed in accessing to a cell; receive L1 signaling and/or L2 signaling from the first network node, the L1 signaling and/or the L2 signaling indicating at least one cell in the group of cells; and apply configuration information corresponding to a cell indicated by the L1 signaling and/or the L2 signaling in the configuration information of the group of cells.

Corresponding to embodiment 10, the processor 1510 may be configured to: receive configuration information of a group of cells from a first network node, the configuration information including cell identifier information and information needed in accessing to a cell, and the configuration information being associated with at least one serving cell of the terminal equipment and/or being associated with at least one area; receive a condition for performing cell change from the first network node; and apply corresponding configuration information in the configuration information of the group of cells where the cell is located when a cell in the group of cells satisfies the condition.

In another implementation, the apparatus for configuring a cell and the processor 1510 may be configured separately; for example, the apparatus for configuring a cell may be configured as a chip connected to the processor 1510, and the functions of the apparatus for configuring a cell are executed under control of the processor 1510.

As shown in FIG. 15, the terminal equipment 1500 may further include a communication module 1530, an input unit 1540, a display 1550, and a power supply 1560. It should be noted that the terminal equipment 1500 does not necessarily include all the parts shown in FIG. 15, and the above components are not necessary. Furthermore, the terminal equipment 1500 may include parts not shown in FIG. 15, and the related art may be referred to.

As shown in FIG. 15, the processor 1510 is sometimes referred to as a controller or an operational control, which may include a microprocessor or other processor devices and/or logic devices. The processor 1510 receives input and controls operations of components of the terminal equipment 1500.

The memory 1520 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 1510 may execute programs stored in the memory 1520, so as to realize information storage or processing, etc. Functions of other parts are similar to those of the related art, which shall not be described herein any further. The parts of the terminal equipment 1500 may be realized by specific hardware, firmware, software, or any combination thereof, without departing from the scope of this disclosure.

It can be seen from the above embodiment that the first network node configures configuration information of a group of cells for the terminal equipment, so that the terminal equipment is able to quickly apply configuration information in the configuration information of the group of cells corresponding to L1 signaling and/or L2 signaling received from the first network node, and change from the serving cell to the cell corresponding to the cell configuration information, thereby lowering latency, signaling overhead and interruption time.

### Embodiment 13

The embodiment of this disclosure provides a communication system, including the terminal equipment described in embodiment 12 and/or the network node described in embodiment 11, and reference may be made to the disclosure contained in embodiments 12 and 11 for details.

For example, reference may be made to FIG. 2 for a structure of the communication system. As shown in FIG. 2, the communication system 100 includes the first network node 101 and the terminal equipment 102. The terminal equipment 102 may be identical to the terminal equipment described in embodiment 12, and/or, the first network node 101 may be identical to the first network node described in embodiment 11, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 10 may either correspond to software modules of procedures of a computer program, or correspond to hardware modules. Such software modules may respectively correspond to the steps shown in FIG. 3. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 10 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 10 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further disclosed.

### Supplement I

1. An apparatus for configuring a cell, provided in a first network node, the apparatus including:
   a first transmitting unit configured to transmit configuration information on a group of cells to a terminal equipment, the configuration information including cell identifier information and information needed in accessing to a cell; and
   a second transmitting unit configured to transmit L1 signaling and/or L2 signaling to the terminal equipment, the L1 signaling and/or the L2 signaling indicating at least one cell in the group of cells.
2. The apparatus according to supplement 1, wherein,
   the cell identifier information includes at least one of a cell identifier and a cell index.
3. The apparatus according to supplement 2, wherein,
   the cell identifier includes a physical cell identifier (PCI) or an NR cell global identifier (NCGI).
4. The apparatus according to any one of supplements 1-3, wherein,
   the information needed in accessing to a cell includes at least one of timer information and an SSB frequency where the cell is located.
5. The apparatus according to supplement 4, wherein the timer information includes a value of a timer.
6. The apparatus according to supplement 4 or 5, wherein the timer includes at least one of the following timers:
   a first timer used for cell switch;
   a second timer used for radio link detection;
   a third timer used for RRC connection reestablishment; and
   a fourth timer used for an RRC connection reestablishment request message.
7. The apparatus according to supplement 6, wherein,
   when the L1 signaling and/or the L2 signaling is/are received, the first timer is started, and/or,
   when cell switch is completed, the first timer is stopped.
8. The apparatus according to supplement 6 or 7, wherein,
   when the first timer expires, the terminal equipment initiates an RRC connection reestablishment procedure.
9. The apparatus according to any one of supplements 1-8, wherein,
   the configuration information further includes at least one of the following: CSI-RS information; downlink timing information; timing advance information used for uplink; dedicated random access resource(s) and/or random access preamble(s); an indication for performing or not performing random access; beam information; a C-RNTI allocated for the terminal equipment; scheduling information of downlink allocation and/or an uplink grant; configured grant information; physical channel configuration; MAC configuration; RLC bearer configuration; PDCP configuration; and radio bearer configuration.
10. The apparatus according to any one of supplements 1-9, wherein,
   the configuration information is information specific to a cell in the group of cells or common to some or all cells in the group of cells, and/or,
   the information needed in accessing to a cell is information specific to a cell in the group of cells or common to the group of cells.
11. The apparatus according to any one of supplements 1-10, wherein,
   the configuration information is associated with at least one serving cell of the terminal equipment or associated with at least one area.
12. The apparatus according to supplement 11, wherein,
   the terminal equipment deems that the configuration information is applicable or valid in the at least one serving cell or the at least one area.
13. The apparatus according to supplement 11 or 12, wherein that the configuration information is associated with at least one serving cell of the terminal equipment includes:
   that the configuration information further includes cell identifier information of the at least one serving cell of the terminal equipment.
14. The apparatus according to supplement 11 or 12, wherein that the configuration information is associated with at least one area includes:
   that the configuration information further includes at least one area identifier.
15. The apparatus according to any one of supplements 1-14, wherein,
   the cell configuration information is included in a first IE.
16. The apparatus according to supplement 1, wherein,
   the L1 signaling is DCI, and/or, the L2 signaling is an MAC CE.
17. The apparatus according to supplement 1 or 16, wherein,
   the L1 signaling and/or the L2 signaling include(s) at least one of the TCI state ID and the cell identifier information.
18. The apparatus according to supplement 1, wherein the apparatus further includes:
   a first configuring unit configured to configure the terminal equipment with configuration information of removing or releasing at least one cell.
19. The apparatus according to supplement 18, wherein,
   the first configuring unit explicitly or implicitly configures the terminal equipment with the configuration information of removing or releasing at least one cell.
20. The apparatus according to supplement 19, wherein the explicitly or implicitly configuring the terminal equipment with the configuration information of removing or releasing at least one cell includes:
   configuring a list for the terminal equipment,
   the list including cell identifier information included in the configuration information to be removed or released, or,
   the list including index information to be removed or released, the index information corresponding to an order of occurrence in the configuration information of the group of cells.
21. The apparatus according to supplement 19, wherein the implicitly configuring the terminal equipment with the configuration information of removing or releasing at least one cell includes:
   removing or releasing configuration information of a cell if the configuration information of the cell no longer appears in the configuration information of the group of cells.
22. The apparatus according to any one of supplements 1-21, wherein,
   the first network node is a source network node or a source network unit or a network unit to which a source network unit is connected.
23. An apparatus for configuring a cell, provided in a terminal equipment, the apparatus including:
   a first receiving unit configured to receive configuration information of a group of cells from a first network node, the configuration information including cell identifier information and information needed in accessing to a cell;
   a second receiving unit configured to receive L1 signaling and/or L2 signaling from the first network node, the L1 signaling and/or the L2 signaling indicating at least one cell in the group of cells; and
   a first applying unit configured to apply configuration information corresponding to a cell indicated by the L1 signaling and/or the L2 signaling in the configuration information of the group of cells.
24. The apparatus according to supplement 23, wherein,
   the cell identifier information includes at least one of a cell identifier and a cell index.
25. The apparatus according to supplement 24, wherein,
   the cell identifier includes a physical cell identifier (PCI) or an NR cell global identifier (NCGI).
26. The apparatus according to any one of supplements 23-25, wherein,
   the information needed in accessing to a cell includes at least one of timer information and an SSB frequency where the cell is located.
27. The apparatus according to supplement 26, wherein the timer information includes a value of a timer.
28. The apparatus according to supplement 26 or 27, wherein the timer includes at least one of the following timers:
   a first timer used for cell switch;
   a second timer used for radio link detection;
   a third timer used for RRC connection reestablishment; and
   a fourth timer used for an RRC connection reestablishment request message.
29. The apparatus according to supplement 28, wherein,
   when the L1 signaling and/or the L2 signaling is/are received, the first timer is started, and/or,
   when cell switch is completed, the first timer is stopped.
30. The apparatus according to supplement 28 or 29, wherein,
   when the first timer expires, the terminal equipment initiates an RRC connection reestablishment procedure.
31. The apparatus according to any one of supplements 23-30, wherein,
   the configuration information further includes at least one of the following: CSI-RS information; downlink timing information; timing advance information used for uplink; dedicated random access resource(s) and/or random access preamble(s); an indication for performing or not performing random access; beam information; a C-RNTI allocated for the terminal equipment; scheduling information of downlink allocation and/or an uplink grant; configured grant information; physical channel configuration; MAC configuration; RLC bearer configuration; PDCP configuration; and radio bearer configuration.
32. The apparatus according to any one of supplements 23-31, wherein,
   the configuration information is information specific to a cell in the group of cells or common to some or all cells in the group of cells, and/or,
   the information needed in accessing to a cell is information specific to a cell in the group of cells or common to the group of cells.
33. The apparatus according to any one of supplements 23-32, wherein,
   the configuration information is associated with at least one serving cell of the terminal equipment or associated with at least one area.
34. The apparatus according to supplement 33, wherein,
   the terminal equipment deems that the configuration information is applicable or valid in the at least one serving cell or the at least one area.
35. The apparatus according to supplement 33 or 34, wherein,
   that the configuration information is associated with at least one serving cell of the terminal equipment includes:
   that the configuration information further includes cell identifier information of the at least one serving cell of the terminal equipment.
36. The apparatus according to supplement 33 or 34, wherein that the configuration information is associated with at least one area includes:
   that the configuration information further includes at least one area identifier.
37. The apparatus according to any one of supplements 23-36, wherein,
   the cell configuration information is included in a first IE.
38. The apparatus according to supplement 23, wherein,
   the L1 signaling is DCI, and/or, the L2 signaling is an MAC CE.
39. The apparatus according to supplement 23 or 38, wherein,
   the L1 signaling and/or the L2 signaling include(s) at least one of the TCI state ID and the cell identifier information.
40. The apparatus according to supplement 23, wherein the apparatus further includes:
   a first removing or releasing unit configured to remove or release configuration information of at least one cell according to the configuration information received from the first network node.
41. The apparatus according to supplement 40, wherein the removing or releasing configuration information of at least one cell according to the configuration information received from the first network node includes:
   receiving a list from the first network node,
   the list including cell identifier information included in the configuration information to be removed or released, or,
   the list including index information to be removed or released, the index information corresponding to an order of occurrence in the configuration information of the group of cells.
42. The apparatus according to supplement 41, wherein the removing or releasing configuration information of at least one cell according to the configuration information received from the first network node further includes at least one of the following:
   removing or releasing configuration information of a cell by the terminal equipment when the cell is included in the list;
   removing or releasing configuration information of a cell when cell identifier information of the cell is included in the list; and
   removing or releasing configuration information of a cell when index information of the cell is included in the list.
43. The apparatus according to supplement 40, wherein the removing or releasing configuration information of at least one cell according to the configuration information received from the first network node includes:
   removing or releasing configuration information of a cell when configuration information of the cell no longer appears in the configuration information of the group of cells.
44. The apparatus according to supplement 23 or 33, wherein,
   the terminal equipment initiates a procedure of updating the configuration information when quality of at least one cell included in the configuration information is poor and/or the terminal equipment leaves at least one serving cell or at least one area where the configuration information is valid or applicable.
45. The apparatus according to supplement 23 or 33, wherein,
   the terminal equipment removes or releases the configuration information when the terminal equipment leaves the at least one serving cell or at least one area where the configuration information is valid or applicable.
46. The apparatus according to supplement 44 or 45, wherein,
   that when the terminal equipment leaves at least one serving cell where the configuration information is valid or applicable refers to that the serving cell of the terminal equipment is not a cell in at least one serving cell with which the configuration information is associated, and/or,
   that when the terminal equipment leaves at least one area where the configuration information is valid or applicable refers to that the serving cell of the terminal equipment is not in at least one area with which the configuration information is associated, or the serving cell of the terminal equipment does not broadcast an area identifier included in the configuration.
47. An apparatus for configuring a cell, provided in a first network node, the apparatus including:
   a third transmitting unit configured to transmit configuration information of a group of cells to a terminal equipment, the configuration information including cell identifier information and information needed in accessing to a cell, and the configuration information being associated with at least one serving cell of the terminal equipment and/or being associated with at least one area; and
   a fourth transmitting unit configured to transmit a condition for performing cell change to the terminal equipment.
48. The apparatus according to supplement 47, wherein,
   the terminal equipment deems that the configuration information is applicable or valid in the at least one serving cell or the at least one area.
49. The apparatus according to supplement 47 or 48, wherein that the configuration information is associated with at least one serving cell of the terminal equipment includes:
   that the configuration information further includes cell identifier information of at least one serving cell of the terminal equipment.
50. The apparatus according to supplement 49, wherein,
   the cell identifier information includes at least one of a cell identifier and a cell index.
51. The apparatus according to supplement 50, wherein,
   the cell identifier includes a physical cell identifier (PCI) or an NR cell global identifier (NCGI).
52. The apparatus according to any one of supplements 47-51, wherein that the configuration information is associated with at least one area includes:
   that the configuration information further comprises at least one area identifier.
53. An apparatus for configuring a cell, provided in a terminal equipment, the apparatus including:
   a third receiving unit configured to receive configuration information of a group of cells from a first network node, the configuration information including cell identifier information and information needed in accessing to a cell, and the configuration information being associated with at least one serving cell of the terminal equipment and/or being associated with at least one area;
   a fourth receiving unit configured to receive a condition for performing cell change from the first network node; and
   a second applying unit configured to apply corresponding configuration information in the configuration information of the group of cells where the cell is located when a cell in the group of cells satisfies the condition.
54. The apparatus according to supplement 53, wherein,
   the terminal equipment deems that the configuration information is applicable or valid in the at least one serving cell and/or the at least one area.
55. The apparatus according to supplement 53 or 54, wherein that the configuration information is associated with at least one serving cell of the terminal equipment includes:
   that the configuration information further includes cell identifier information of at least one serving cell of the terminal equipment.
56. The apparatus according to supplement 55, wherein,
   the cell identifier information includes at least one of a cell identifier and a cell index.
57. The apparatus according to supplement 56, wherein,
   the cell identifier includes a physical cell identifier (PCI) or an NR cell global identifier (NCGI).
58. The apparatus according to any one of supplements 53-57, wherein that the configuration information is associated with at least one area includes:
   that the configuration information further includes at least one area identifier.
59. The apparatus according to any one of supplements 53-58, wherein,
   the terminal equipment maintains the configuration information when the terminal equipment is located within the at least one area with which the configuration information is associated.
60. The apparatus according to any one of supplements 53-59, wherein the terminal equipment initiates a procedure of updating the configuration information when quality of at least one cell included in the configuration information is poor and/or the terminal equipment leaves at least one serving cell or at least one area where the configuration information is valid or applicable.
61. The apparatus according to any one of supplements 53-60, wherein,
   the terminal equipment removes or releases the configuration information when the terminal equipment leaves the at least one serving cell or at least one area with which the configuration information is associated.
62. The apparatus according to supplement 61, wherein,
   that when the terminal equipment leaves the at least one serving cell with which the configuration information is associated refers to that the serving cell of the terminal equipment is not a cell in the at least one serving cell with which the configuration information is associated, and/or,
   that when the terminal equipment leaves the at least one area with which the configuration information is associated refers to that the serving cell of the terminal equipment is not in the at least one area with which the configuration information is associated, or the serving cell of the terminal equipment does not broadcast the area identifier included in the configuration.
63. A network node, including the apparatus as described in any one of supplements 1-22 and 47-52.
64. A terminal equipment, including the apparatus as described in any of supplements 23-46 and 53-62.
65. A communication system, including the network node as described in supplement 63 and/or the terminal equipment as described in supplement 64.

### Supplement II

1. A method for configuring a cell, applicable to a first network node, the method including:
   transmitting configuration information on a group of cells to a terminal equipment, the configuration information including cell identifier information and information needed in accessing to a cell; and
   transmitting L1 signaling and/or L2 signaling to the terminal equipment, the L1 signaling and/or the L2 signaling indicating at least one cell in the group of cells.
2. The method according to supplement 1, wherein,
   the cell identifier information includes at least one of a cell identifier and a cell index.
3. The method according to supplement 2, wherein,
   the cell identifier includes a physical cell identifier (PCI) or an NR cell global identifier (NCGI).
4. The method according to any one of supplements 1-3, wherein,
   the information needed in accessing to a cell includes at least one of timer information and an SSB frequency where the cell is located.
5. The method according to supplement 4, wherein the timer information includes a value of a timer.
6. The method according to supplement 4 or 5, wherein the timer includes at least one of the following timers:
   a first timer used for cell switch;
   a second timer used for radio link detection;
   a third timer used for RRC connection reestablishment; and
   a fourth timer used for an RRC connection reestablishment request message.
7. The method according to supplement 6, wherein,
   when the L1 signaling and/or the L2 signaling is/are received, the first timer is started, and/or,
   when cell switch is completed, the first timer is stopped.
8. The method according to supplement 6 or 7, wherein,
   when the first timer expires, the terminal equipment initiates an RRC connection reestablishment procedure.
9. The method according to any one of supplements 1-8, wherein,
   the configuration information further includes at least one of the following: CSI-RS information; downlink timing information; timing advance information used for uplink; dedicated random access resource(s) and/or random access preamble(s); an indication for performing or not performing random access; beam information; a C-RNTI allocated for the terminal equipment; scheduling information of downlink allocation and/or an uplink grant; configured grant information; physical channel configuration; MAC configuration; RLC bearer configuration; PDCP configuration; and radio bearer configuration.
10. The method according to any one of supplements 1-9, wherein,
   the configuration information is information specific to a cell in the group of cells or common to some or all cells in the group of cells, and/or,
   the information needed in accessing to a cell is information specific to a cell in the group of cells or common to the group of cells.
11. The method according to any one of supplements 1-10, wherein,
   the configuration information is associated with at least one serving cell of the terminal equipment or associated with at least one area.
12. The method according to supplement 11, wherein,
   the terminal equipment deems that the configuration information is applicable or valid in the at least one serving cell or the at least one area.
13. The method according to supplement 11 or 12, wherein that the configuration information is associated with at least one serving cell of the terminal equipment includes:
   that the configuration information further includes cell identifier information of the at least one serving cell of the terminal equipment.
14. The method according to supplement 11 or 12, wherein that the configuration information is associated with at least one area includes:
   that the configuration information further includes at least one area identifier.
15. The method according to any one of supplements 1-14, wherein,
   the cell configuration information is included in a first IE.
16. The method according to supplement 1, wherein,
   the L1 signaling is DCI, and/or, the L2 signaling is an MAC CE.
17. The method according to supplement 1 or 16, wherein,
   the L1 signaling and/or the L2 signaling include(s) at least one of the TCI state ID and the cell identifier information.
18. The method according to supplement 1, wherein the method further includes:
   configuring the terminal equipment with configuration information of removing or releasing at least one cell.
19. The method according to supplement 18, wherein the configuring the terminal equipment with configuration information of removing or releasing at least one cell includes:
   explicitly or implicitly configuring the terminal equipment with the configuration information of removing or releasing at least one cell.
20. The method according to supplement 19, wherein the explicitly configuring the terminal equipment with the configuration information of removing or releasing at least one cell includes:
   configuring a list for the terminal equipment,
   the list including cell identifier information included in the configuration information to be removed or released, or,
   the list including index information to be removed or released, the index information corresponding to an order of occurrence in the configuration information of the group of cells.
21. The method according to supplement 19, wherein the implicitly configuring the terminal equipment with the configuration information of removing or releasing at least one cell includes:
   removing or releasing configuration information of a cell if the configuration information of the cell no longer appears in the configuration information of the group of cells.
22. The method according to any one of supplements 1-21, wherein,
   the first network node is a source network node or a source network unit or a network unit to which a source network unit is connected.
23. A method for configuring a cell, applicable to a terminal equipment, the method including:
   receiving configuration information of a group of cells from a first network node, the configuration information including cell identifier information and information needed in accessing to a cell;
   receiving L1 signaling and/or L2 signaling from the first network node, the L1 signaling and/or the L2 signaling indicating at least one cell in the group of cells; and
   applying configuration information corresponding to a cell indicated by the L1 signaling and/or the L2 signaling in the configuration information of the group of cells.
24. The method according to supplement 23, wherein,
   the cell identifier information includes at least one of a cell identifier and a cell index.
25. The method according to supplement 24, wherein,
   the cell identifier includes a physical cell identifier (PCI) or an NR cell global identifier (NCGI).
26. The method according to any one of supplements 23-25, wherein,
   the information needed in accessing to a cell includes at least one of timer information and an SSB frequency where the cell is located.
27. The method according to supplement 26, wherein the timer information includes a value of a timer.
28. The method according to supplement 26 or 27, wherein the timer includes at least one of the following timers:
   a first timer used for cell switch;
   a second timer used for radio link detection;
   a third timer used for RRC connection reestablishment; and
   a fourth timer used for an RRC connection reestablishment request message.
29. The method according to supplement 28, wherein,
   when the L1 signaling and/or the L2 signaling is/are received, the first timer is started, and/or,
   when cell switch is completed, the first timer is stopped.
30. The method according to supplement 28 or 29, wherein,
   when the first timer expires, the terminal equipment initiates an RRC connection reestablishment procedure.
31. The method according to any one of supplements 23-30, wherein,
   the configuration information further includes at least one of the following: CSI-RS information; downlink timing information; timing advance information used for uplink; dedicated random access resource(s) and/or random access preamble(s); an indication for performing or not performing random access; beam information; a C-RNTI allocated for the terminal equipment; scheduling information of downlink allocation and/or an uplink grant; configured grant information; physical channel configuration; MAC configuration; RLC bearer configuration; PDCP configuration; and radio bearer configuration.
32. The method according to any one of supplements 23-31, wherein,
   the configuration information is information specific to a cell in the group of cells or common to some or all cells in the group of cells, and/or,
   the information needed in accessing to a cell is information specific to a cell in the group of cells or common to the group of cells.
33. The method according to any one of supplements 23-32, wherein,
   the configuration information is associated with at least one serving cell of the terminal equipment or associated with at least one area.
34. The method according to supplement 33, wherein,
   the terminal equipment deems that the configuration information is applicable or valid in the at least one serving cell or the at least one area.
35. The method according to supplement 33 or 34, wherein that the configuration information is associated with at least one serving cell of the terminal equipment includes:
   that the configuration information further includes cell identifier information of the at least one serving cell of the terminal equipment.
36. The method according to supplement 33 or 34, wherein that the configuration information is associated with at least one area includes:
   that the configuration information further includes at least one area identifier.
37. The method according to any one of supplements 23-36, wherein,
   the cell configuration information is included in a first IE.
38. The method according to supplement 23, wherein,
   the L1 signaling is DCI, and/or, the L2 signaling is an MAC CE.
39. The method according to supplement 23 or 38, wherein,
   the L1 signaling and/or the L2 signaling include(s) at least one of the TCI state ID and the cell identifier information.
40. The method according to supplement 23, wherein the method further includes:
   removing or releasing configuration information of at least one cell according to the configuration information received from the first network node.
41. The method according to supplement 40, wherein the removing or releasing configuration information of at least one cell according to the configuration information received from the first network node includes:
   receiving a list from the first network node,
   the list including cell identifier information included in the configuration information to be removed or released, or,
   the list including index information to be removed or released, the index information corresponding to an order of occurrence in the configuration information of the group of cells.
42. The method according to supplement 41, wherein the removing or releasing configuration information of at least one cell according to the configuration information received from the first network node further includes at least one of the following:
   removing or releasing configuration information of a cell by the terminal equipment when the cell is included in the list;
   removing or releasing configuration information of a cell when cell identifier information of the cell is included in the list; and
   removing or releasing configuration information of a cell when index information of the cell is included in the list.
43. The method according to supplement 40, wherein the removing or releasing configuration information of at least one cell according to the configuration information received from the first network node includes:
   removing or releasing configuration information of a cell by the terminal equipment when configuration information of the cell no longer appears in the configuration information of the group of cells.
44. The method according to supplement 23 or 33, wherein,
   the terminal equipment initiates a procedure of updating the configuration information when quality of at least one cell included in the configuration information is poor and/or the terminal equipment leaves at least one serving cell or at least one area where the configuration information is valid or applicable.
45. The method according to supplement 23 or 33, wherein the method further includes:
   removing or releasing the configuration information by the terminal equipment when the terminal equipment leaves the at least one serving cell or at least one area where the configuration information is valid or applicable.
46. The method according to supplement 44 or 45, wherein,
   that when the terminal equipment leaves at least one serving cell where the configuration information is valid or applicable refers to that the serving cell of the terminal equipment is not a cell in at least one serving cell with which the configuration information is associated, and/or,
   that when the terminal equipment leaves at least one area where the configuration information is valid or applicable refers to that the serving cell of the terminal equipment is not in at least one area with which the configuration information is associated, or the serving cell of the terminal equipment does not broadcast an area identifier included in the configuration.
47. A method for configuring a cell, applicable to a first network node, the method including:
   transmitting configuration information of a group of cells to a terminal equipment, the configuration information including cell identifier information and information needed in accessing to a cell, and the configuration information being associated with at least one serving cell of the terminal equipment and/or being associated with at least one area; and
   transmitting a condition for performing cell change to the terminal equipment.
48. The method according to supplement 47, wherein,
   the terminal equipment deems that the configuration information is applicable or valid in the at least one serving cell or the at least one area.
49. The method according to supplement 47 or 48, wherein that the configuration information is associated with at least one serving cell of the terminal equipment includes:
   that the configuration information further includes cell identifier information of at least one serving cell of the terminal equipment.
50. The method according to supplement 49, wherein,
   the cell identifier information includes at least one of a cell identifier and a cell index.
51. The method according to supplement 50, wherein,
   the cell identifier includes a physical cell identifier (PCI) or an NR cell global identifier (NCGI).
52. The method according to any one of supplements 47-51, wherein that the configuration information is associated with at least one area includes:
   that the configuration information further comprises at least one area identifier.
53. A method for configuring a cell, applicable to a terminal equipment, the method including:
   receiving configuration information of a group of cells from a first network node, the configuration information including cell identifier information and information needed in accessing to a cell, and the configuration information being associated with at least one serving cell of the terminal equipment and/or being associated with at least one area;
   receiving a condition for performing cell change from the first network node; and
   applying corresponding configuration information in the configuration information of the group of cells where the cell is located when a cell in the group of cells satisfies the condition.
54. The method according to supplement 53, wherein,
   the terminal equipment deems that the configuration information is applicable or valid in the at least one serving cell and/or the at least one area.
55. The method according to supplement 53 or 54, wherein that the configuration information is associated with at least one serving cell of the terminal equipment includes:
   that the configuration information further includes cell identifier information of at least one serving cell of the terminal equipment.
56. The method according to supplement 55, wherein,
   the cell identifier information includes at least one of a cell identifier and a cell index.
57. The method according to supplement 56, wherein,
   the cell identifier includes a physical cell identifier (PCI) or an NR cell global identifier (NCGI).
58. The method according to any one of supplements 53-57, wherein that the configuration information is associated with at least one area includes:
   that the configuration information further includes at least one area identifier.
59. The method according to any one of supplements 53-58, wherein the method further includes:
   maintaining the configuration information by the terminal equipment when the terminal equipment is located within the at least one area with which the configuration information is associated.
60. The method according to any one of supplements 53-59, wherein the method further includes:
   initiating a procedure of updating the configuration information by the terminal equipment when quality of at least one cell included in the configuration information is poor and/or the terminal equipment leaves at least one serving cell or at least one area where the configuration information is valid or applicable.
61. The method according to any one of supplements 53-60, wherein the method further includes:
   removing or releasing the configuration information by the terminal equipment when the terminal equipment leaves the at least one serving cell or at least one area with which the configuration information is associated.
62. The method according to supplement 61, wherein,
   that when the terminal equipment leaves the at least one serving cell with which the configuration information is associated refers to that the serving cell of the terminal equipment is not a cell in the at least one serving cell with which the configuration information is associated, and/or,
   that when the terminal equipment leaves the at least one area with which the configuration information is associated refers to that the serving cell of the terminal equipment is not in the at least one area with which the configuration information is associated, or the serving cell of the terminal equipment does not broadcast the area identifier included in the configuration.

## Claims

1. An apparatus for configuring a cell, provided in a first network node, the apparatus comprising:
a first transmitting unit configured to transmit configuration information on a group of cells to a terminal equipment, the configuration information comprising cell identification information and information needed in accessing to a cell; and
a second transmitting unit configured to transmit L1 signaling and/or L2 signaling to the terminal equipment, the L1 signaling and/or the L2 signaling indicating at least one cell in the group of cells.

2. The apparatus according to claim 1, wherein,
the cell identification information comprises at least one of a cell identifier and a cell index.

3. The apparatus according to claim 1, wherein,
the information needed in accessing to cell comprises at least one of timer information and an SSB frequency where the cell is located.

4. The apparatus according to claim 3, wherein the timer information comprises a value of a timer.

5. The apparatus according to claim 3, wherein,
when the L1 signaling and/or the L2 signaling is/are received, a first timer for a cell switch is started; and/or,
when the cell switch is completed, the first timer is stopped.

6. The apparatus according to claim 3, wherein,
when a first timer for a cell switch expires, the terminal equipment initiates an RRC connection reestablishment procedure.

7. The apparatus according to claim 1, wherein,
the configuration information further comprises at least one of the following: CSI-RS information; downlink timing information; timing advance information for uplink; a random access resource and/or a random access preamble; an indication for performing or not performing random access; beam information; a C-RNTI allocated for the terminal equipment; scheduling information of downlink allocation and/or an uplink grant; configured grant information; physical channel configuration; MAC configuration; RLC bearer configuration; PDCP configuration; and radio bearer configuration.

8. The apparatus according to claim 1, wherein,
the configuration information is information specific to a cell in the group of cells or common to some or all cells in the group of cells, and/or,
the information needed in accessing to a cell is information specific to a cell in the group of cells or common to some or all cells in the group of cells.

9. The apparatus according to claim 1, wherein,
the configuration information is associated with at least one serving cell of the terminal equipment or associated with at least one area.

10. The apparatus according to claim 9, wherein that the configuration information is associated with at least one area comprises:
that the configuration information further comprises at least one area identifier.

11. The apparatus according to claim 1, wherein the apparatus further comprises:
a first configuration unit configured to configure the terminal equipment with configuration information of removing or releasing at least one cell.

12. The apparatus according to claim 11, wherein,
the first configuration unit explicitly or implicitly configures the terminal equipment with the configuration information of removing or releasing at least one cell.

13. An apparatus for configuring a cell, provided in a terminal equipment, the apparatus comprising:
a first receiving unit configured to receive configuration information of a group of cells from a first network node, the configuration information comprising cell identification information and information needed in accessing to a cell;
a second receiving unit configured to receive L1 signaling and/or L2 signaling from the first network node, the L1 signaling and/or the L2 signaling indicating at least one cell in the group of cells; and
a first applying unit configured to apply configuration information corresponding to a cell indicated by the L1 signaling and/or the L2 signaling in the configuration information of the group of cells.

14. The apparatus according to claim 13, wherein the apparatus further comprises:
a first removing or releasing unit configured to remove or release configuration information of at least one cell according to the configuration information received from the first network node.

15. The apparatus according to claim 13, wherein,
when quality of at least one cell comprised in the configuration information is not good and/or the terminal equipment leaves at least one serving cell or at least one area where the configuration information is valid or applicable, the terminal equipment initiates a configuration information update procedure.

16. The apparatus according to claim 13, wherein,
when the terminal equipment leaves the at least one serving cell or at least one area where the configuration information is valid or applicable, the terminal equipment releases or removes the configuration information.

17. The apparatus according to claim 15, wherein,
that when the terminal equipment leaves the at least one serving cell where the configuration information is valid or applicable means that a serving cell of the terminal equipment is not a cell in at least one serving cell with which the configuration information is associated; and/or,
that when the terminal equipment leaves at least one area where the configuration information is valid or applicable means that a serving cell of the terminal equipment is not in at least one area with which the configuration information is associated, or that a serving cell of the terminal equipment does not broadcast an area identifier comprised in the configuration.

18. An apparatus for configuring a cell, provided in a first network node, the apparatus comprising:
a third transmitting unit configured to transmit configuration information of a group of cells to a terminal equipment, the configuration information including cell identification information and information needed in accessing to cell, and the configuration information being associated with at least one serving cell of the terminal equipment and/or being associated with at least one area; and
a fourth transmitting unit configured to transmit a condition for performing a cell switch to the terminal equipment.

19. The apparatus according to claim 18, wherein that the configuration information is associated with at least one serving cell of the terminal equipment comprises:
that the configuration information further comprises cell identification information of at least one serving cell of the terminal equipment.

20. The apparatus according to claim 18, wherein that the configuration information is associated with at least one area comprises:
that the configuration information further comprises at least one area identifier.
